# EUROPEAN PATENT APPLICATION

(11) **EP 4 650 151 A1**
(43) Date of publication of application: **19.11.2025**
(21) Application number: 24741216.6
(22) Date of filing: 09.01.2024
(51) Int. Cl.: B29C 64/124, B29C 64/20, B29C 64/321, B29C 64/223, B33Y 10/00, B33Y 30/00

(54) **THREE-DIMENSIONAL PRINTING APPARATUS AND THREE-DIMENSIONAL PRINTING METHOD**

(30) Priority: 10.01.2023 CN 202310038195
(71) Applicant: Guangzhou Heygears IMC. Inc, Guangzhou, Guangdong 510663 (CN)
(72) Inventor: WAN, Xin, Guangzhou, Guangdong 510663 (CN); DU, Shengrong, Guangzhou, Guangdong 510663 (CN); ZHANG, Haidong, Guangzhou, Guangdong 510663 (CN); YAO, Xiaoxia, Guangzhou, Guangdong 510663 (CN); HU, Jun, Guangzhou, Guangdong 510663 (CN)
(74) Representative: Studio Torta S.p.A.
(86) International application number: PCT/CN2024/071258
(87) International publication number: WO 2024/149217

(57) **Abstract**

The present invention relates to the technical field of three-dimensional forming apparatuses and particularly relates to a three-dimensional printing apparatus and a three-dimensional printing method. The three-dimensional printing apparatus includes a material carrying mechanism, a supplying mechanism, a driving mechanism, an optical mechanism and a forming platform mechanism, wherein the material carrying mechanism is provided with a carrying area configured to carry a printing material; the supplying mechanism includes a supplying assembly configured to quantitatively supply a plurality of types of printing materials; and the driving mechanism is configured to realize a relative movement between the carrying area and the supplying assembly, so that the supplying mechanism quantitatively supplies a preset type of printing material at a preset position of the material carrying mechanism. A plurality of materials can be printed on a single layer while avoiding the risk of material mixing, color printing can be realized without the need for subsequent coloring, and the printing of different material performance requirements can also be realized. In the photo-curing technology using a projection manner, the edge of a printed object is directly cured by using a projection plane, therefore the precision of the edge of the printed object depends on the precision of an optical projection image, and thus compared with ink-jet printing, the printing precision is higher.

## Description

The present invention claims the priority of Chinese Patent Application 202310038195.9, filed to the China National Intellectual Property Administration on January 10, 2023, and entitled "Three-Dimensional Printing Apparatus and Three-Dimensional Printing Method", the entire contents of which are herein incorporated by reference.

### Technical Field

The present invention relates to the technical field of three-dimensional forming apparatuses, and in particular to a three-dimensional printing apparatus and a three-dimensional printing method.

### Background

The 3D printing technology is to manufacture a three-dimensional entity in a layer-by-layer stacking manner via a 3D printing apparatus according to three-dimensional model data of an object. The 3D printing technology can overcome problems in terms of special structure that is unable to be formed by conventional mechanical processing at present, and realize simple production of any components with complex structures. The existing photo-curing printing technology is divided into three types: laser stereolithography apparatus SLA (laser point light source curing), DLP (projector surface light source curing), and LCD (liquid crystal surface photo-curing).

At present, the field of application of the photo-curing 3D printing technology is increasingly widespread, and the photo-curing technology especially has wide application in the fields of molds, customized commodities, medical jigs, dentistry, garage kits, prostheses and the like due to high forming precision. During model manufacturing of the photo-curing 3D printing technology, layer-by-layer printing is usually performed in a layered slicing processing manner, a photocurable material between a printing reference surface and a model is cured to form a pattern cured layer, and the above steps are repeated to form, on a forming platform, a printed object formed by accumulated pattern cured layers. The majority of photo-curing printers in the related arts can only print parts of single printing material, and there are very few photo-curing machines capable of printing parts of various printing materials.

At home and abroad, the existing color 3D printing technology generally uses the ink-jet sinking undifferentiated photo-curing technology, that is, after the printing materials are ejected by a linear nozzle, a light source immediately follows the nozzle to expose, polymerize and cure all ejected resin on a forming platform/forming carrier without difference. For example, in some related arts, a plurality of nozzles are disposed on one side of a material tank, so as to eject resin of different colors into the material tank for printing a colored model. However, the printing method only ejects the resin of different colors from one side into the material tank via the nozzles, which makes it difficult to ensure that the resin flows flat in the material tank. The printing precision heavily depends on the liquid ejecting precision of the nozzles, thereby affecting the printing quality.

### Summary

The objective of the present invention includes providing a three-dimensional printing apparatus and a three-dimensional printing method, so as to print a part having a plurality of printing materials.

Embodiments of the present invention can be realized as follows:
In a first aspect, the present invention provides a three-dimensional printing apparatus, including a material carrying mechanism, a supplying mechanism, a driving mechanism, an optical mechanism and a forming platform mechanism, wherein the material carrying mechanism is light-transmissive and has a carrying area configured to carry a printing material; the supplying mechanism includes a supplying assembly configured to quantitatively supply a plurality of types of printing materials; the driving mechanism is configured to realize a relative movement between the carrying area and the supplying assembly, so that the supplying mechanism quantitatively supplies a preset type of printing material at a preset position of the material carrying mechanism; the optical mechanism is configured to project light and expose the printing materials in the carrying area, so that the printing materials are subjected to a photo-curing reaction to form a printing model; and the forming platform mechanism is configured to adhere, layer by layer, cured layers formed by curing the printing material and separate the cured layers from the carrying area of the material carrying mechanism.

In an optional implementation, the three-dimensional printing apparatus further includes: a leveling mechanism configured to maintain, within a preset range, a thickness of the printing material on the material carrying mechanism supplied by the supplying mechanism; and/or a cleaning mechanism configured to remove a residual printing material on the carrying area after the forming platform mechanism separates the cured layer.

In an optional implementation, the leveling mechanism includes any one of a scraper assembly, a leveling roller assembly, a roller assembly, or a push rod assembly.

In an optional implementation, the cleaning mechanism includes any one of a scraper assembly, a high-pressure air gun, and a wiping assembly.

In an optional implementation, the supplying assembly includes a dispenser assembly, and the dispenser assembly is configured to quantitatively supply the plurality of types of printing materials.

In an optional implementation, an optical system of the optical mechanism is any one of a DLP projection system, a Micro-LED display system, an LCOS optical system, an LCD display system or a laser galvanometer scanning system.

In an optional implementation, the three-dimensional printing apparatus further includes a calibration system, and the calibration system is configured to perform an optical calibration on the optical mechanism and/or perform a calibration on the supplying assembly; the calibration system includes a camera device, a calibration device and a calibration plate; the calibration plate is used for being placed on the three-dimensional printing apparatus, and calibration points distributed at a preset distance are formed on the calibration plate; an optical engine of the optical mechanism is used for projecting, to the carrying area, actual projection points distributed at the preset distance; the camera device is used for photographing the calibration points on the calibration plate and the actual projection points on the carrying area; and the calibration device is in communication connection with the camera device.

In an optional implementation, the three-dimensional printing apparatus further includes a calibration system, and the calibration system is configured to calibrate and align a supplying point of the supplying assembly and a projection point of the optical mechanism.

In an optional implementation, the material carrying mechanism includes a transparent film, an intermediate layer and an upper transparent plate, and the transparent film is attached to the upper transparent plate via the intermediate layer.

In an optional implementation, the material carrying mechanism includes a transparent film and a film frame, and the transparent film is tightly stretched and fixed on the film frame.

In an optional implementation, the film frame includes an upper film frame, and the transparent film is tensioned on the upper film frame; or the film frame includes an upper film frame and a lower film frame, and the transparent film is tightly stretched and fixed between the upper film frame and the lower film frame.

In an optional implementation, the material carrying mechanism further includes an upper transparent plate, and the upper transparent plate is disposed below the transparent film.

In an optional implementation, a fixing and constraining medium is disposed between the upper transparent plate and the transparent film, and the fixing and constraining medium includes one or more of a silicone layer, an adhesive layer and a back adhesive layer.

In an optional implementation, a first cavity is formed between the upper transparent plate and the transparent film, and a fluid is introduced into the first cavity.

In an optional implementation, the fluid is at least one of oxygen-rich liquid, inert liquid, oxygen, air, oxygen-rich gas, and nitrogen.

In an optional implementation, the material carrying mechanism further includes a gas supply assembly and a lower transparent plate, the lower transparent plate is located below the upper transparent plate, a second cavity is formed between the lower transparent plate and the upper transparent plate, and the gas supply assembly is configured to introduce a gas into the second cavity.

In an optional implementation, the driving mechanism includes a first driving assembly, and the first driving assembly is configured to drive the supplying assembly to move in a space; or
the driving mechanism includes a second driving assembly, and the second driving assembly is configured to drive the carrying area of the material carrying mechanism to move in a space; or the driving mechanism includes a first driving assembly and a second driving assembly, the first driving assembly is configured to drive the supplying assembly to move in a space, and the second driving assembly is configured to drive the carrying area of the material carrying mechanism to move in the space.

In an optional implementation, the supplying mechanism further includes a heating assembly, and the heating assembly is configured to heat the supplying assembly, so that a temperature of the supplying assembly ranges from 20 °C to 100 °C.

In an optional implementation, the supplying mechanism further includes a heating assembly, and the heating assembly is configured to heat the supplying assembly, so that a temperature of the supplying assembly is higher than 100 °C and not higher than 200 °C.

In a second aspect, the present invention provides a three-dimensional printing method, applied to the above three-dimensional printing apparatus. The three-dimensional printing method includes: acquiring a three-dimensional model, slicing the three-dimensional model to obtain a plurality of slice image layers, and generating a corresponding printing strategy for each slice image layer, wherein the printing strategy includes at least one of: a relative movement information of the carrying area and the supplying assembly, material types of the printing materials supplied by the supplying mechanism, and a projection information of the optical mechanism; supplying the printing material to the carrying area of the material carrying mechanism according to the printing strategy, wherein at least part of the slice image layers corresponds to two or more material types; exposing and curing the printing material by the optical mechanism according to the projection information, so as to form the cured layer; and controlling the forming platform mechanism to separate the cured layer.

In an optional implementation, the method further includes: after controlling the forming platform mechanism to separate the cured layer, cleaning a printing residue on the material carrying mechanism.

In an optional implementation, the method further includes: after controlling the forming platform mechanism to separate the cured layer, cleaning a printing residue on the cured layer.

In an optional implementation, the method further includes: after supplying the printing material to the carrying area of the material carrying mechanism, leveling the printing material in the carrying area to a preset thickness.

In an optional implementation, slicing the three-dimensional model to obtain the plurality of slice image layers includes: generating a series of slice image layers according to the three-dimensional model; and segmenting at least part of areas of at least part of the slice image layers into several sub-areas, wherein gaps are provided between at least part of adjacent sub-areas.

In an optional implementation, supplying the printing material to the carrying area of the material carrying mechanism according to the printing strategy includes: controlling the supplying assembly to move relative to the carrying area by the driving mechanism according to the printing strategy, so that a position of the supplying assembly aligns with a supplying position; and supplying a corresponding printing material at the supplying position via the supplying assembly of the supplying mechanism according to the printing strategy.

In an optional implementation, the material type includes a color information and a material performance information.

In an optional implementation, the three-dimensional model includes a first portion and a second portion, a printing material with a first-type color is supplied at a supplying position corresponding to the first portion, a printing material with a second-type color is supplied at a supplying position corresponding to the second portion, the first-type color is one or more colors, and the second-type color is one or more colors.

In an optional implementation, the first portion includes a contour portion of the three-dimensional model, and the second portion includes a filling portion and/or a sacrificial structure of the three-dimensional model; or
the first portion includes a filling portion of the three-dimensional model, and the second portion includes a contour portion and/or a sacrificial structure of the three-dimensional model.

In an optional implementation, the first portion includes an outer surface layer of a solid structure of the three-dimensional model, and the second portion includes other regions and/or a sacrificial structure of the solid structure of the three-dimensional model.

In an optional implementation, the three-dimensional model includes a first portion and a second portion, a printing material with a first-type performance is supplied at a supplying position corresponding to the first portion, and a printing material with a second-type performance is supplied at a supplying position corresponding to the second portion.

In an optional implementation, the first portion includes a contour portion of the three-dimensional model, and the second portion includes a filling portion and/or a sacrificial structure of the three-dimensional model.

In an optional implementation, the sacrificial structure is a bottom plate and/or a support of the three-dimensional model.

In an optional implementation, the printing material with the second-type performance used by the sacrificial structure of the three-dimensional model is a material capable of being dissolved by specific solvent.

In an optional implementation, a temperature of the supplying assembly ranges from 20 °C to 100 °C during a supplying process.

In an optional implementation, a temperature of the supplying assembly is higher than 100 °C and not higher than 200 °C during a supplying process.

The beneficial effects of the embodiments of the present invention include:
According to the three-dimensional printing apparatus provided in present invention, under the action of the driving mechanism, a relative movement of the supplying assembly of the supplying mechanism and the carrying area of the forming platform is allowable, so that the supplying assembly can be located at any position of the carrying area to supply the printing material at any position of the carrying area. The supplying mechanism can supply the plurality of types of printing materials to the carrying area through the supplying assembly, so that required types of printing materials can be correspondingly supplied at different positions of the carrying area as needed, thereby implementing the printing of a plurality of materials in a single layer while avoiding the risk of material mixing, color printing can be realized without the need for subsequent coloring, and the printing of different material performance requirements can also be realized; and moreover, it is possible to avoid the situation in which residual materials, such as uncured resin or residues on the upper-layer, generated during the printing process, affect the printing of the next layer, so that the printing quality is better. The three-dimensional printing apparatus provided in the present invention can also implement the above three-dimensional printing method, and thus also has the beneficial effects of improving the operation efficiency, reducing the labor cost, etc.

The three-dimensional printing method provided in the present invention implements the printing of a plurality of materials on a single layer while avoiding the risk of material mixing, which can implement color printing without the need for subsequent coloring, and can also implement the printing of different material performance requirements; and by using the photo-curing technology in a projection manner, the edge of a printed object is directly cured by using a projection contour in a projection plane, therefore the precision of the edge of the printed object depends on the precision of a projection image of the optical mechanism, which leads to a higher printing precision, as compared with ink-jet printing. In addition, compared with overhead projection printing, printing is preferably performed in a bottom projection manner, and bottom projection and lifting printing requires fewer supports than overhead projection and sinking printing, thereby saving more materials.

### Brief Description of the Drawings

The drawings herein are incorporated in and constitute a part of the present specification, illustrate embodiments conforming to the present invention, and serve to explain the principles of the present invention together with the specification.

To illustrate technical solutions in the embodiments of the present invention or in the prior art more clearly, a brief introduction on the drawings which are needed in the description of the embodiments or the prior art is given below. Apparently, for those ordinary skilled in the art, other drawings can be obtained according to these drawings without any creative effort.
Fig. 1 is a schematic structural view of a three-dimensional printing apparatus provided in an embodiment of present invention;
Fig. 2 is a schematic view of a partial structure of a leveling roller assembly as a leveling assembly of a three-dimensional printing apparatus provided in an embodiment of present invention;
Fig. 3 is a schematic view of a working principle of a leveling roller assembly as a leveling assembly of a three-dimensional printing apparatus provided in an embodiment of present invention;
Fig. 4 is a schematic view of a partial structure of a scraper assembly as a leveling assembly of a three-dimensional printing apparatus provided in an embodiment of present invention;
Fig. 5 is a schematic view of a working principle of a scraper assembly as a leveling assembly of a three-dimensional printing apparatus provided in an embodiment of present invention;
Fig. 6 is a schematic structural view of a scraper assembly in a three-dimensional printing apparatus provided in an embodiment of present invention;
Fig. 7 is a schematic structural view of a wiping assembly in a three-dimensional printing apparatus provided in an embodiment of present invention;
Fig. 8 is a schematic structural view of a material carrying mechanism in a three-dimensional printing apparatus provided in an embodiment of present invention;
Fig. 9 is a schematic structural view of a three-dimensional printing apparatus with an RGB color system provided in an embodiment of present invention;
Fig. 10 is a schematic structural view of a three-dimensional printing apparatus with a CMYK color system provided in an embodiment of present invention;
Fig. 11 is a schematic structural view of a material carrying mechanism in a three-dimensional printing apparatus provided in an embodiment of present invention;
Fig. 12 is a schematic structural view of a material carrying mechanism in a three-dimensional printing apparatus provided in an embodiment of present invention;
Fig. 13 is a schematic structural view of a material carrying mechanism in a three-dimensional printing apparatus provided in an embodiment of present invention;
Fig. 14 is a schematic structural view of a material carrying mechanism in a three-dimensional printing apparatus provided in an embodiment of present invention;
Fig. 15 is a schematic structural view of a three-dimensional printing apparatus provided in an embodiment of present invention;
Fig. 16 is a schematic structural view of a three-dimensional printing apparatus provided in an embodiment of present invention;
Fig. 17 is a schematic flowchart of a three-dimensional printing method provided in an embodiment of present invention;
Fig. 18 is a schematic view of a three-dimensional printing model provided in an embodiment of present invention;
Fig. 19 is another schematic view of a three-dimensional printing model provided in an embodiment of present invention;
Fig. 20 is still another schematic view of a three-dimensional printing model provided in an embodiment of present invention; and
Fig. 21 is a schematic view of a segmented slice image layer of a three-dimensional printing model provided in an embodiment of present invention.
100. material carrying mechanism; 101. transparent film; 102. upper film frame; 103. lower film frame; 104. upper transparent plate; 105. lower transparent plate; 106. second cavity; 107. gas supply assembly; 108. carrying area; 109. micropore; 110. intermediate layer;
200. supplying mechanism; 201. supplying assembly; 202. pipeline; 203. material storage assembly;
300. driving mechanism; 301. first driving assembly; 3011. second elevator assembly; 3012. translation assembly;
400. optical mechanism;
500. forming platform mechanism; 501. first elevator assembly; 502. forming platform; 5021. forming surface;
600. cleaning mechanism; 601. waste accommodating device; 602. wiping assembly; 602. fixed part; 6022. elastic member; 6023. movable part; 6024. material feeding roller; 6025. material collection roller; 6026. printing material;
700. leveling mechanism; 701. leveling assembly;
800. scraper assembly; 801. scraper blade holder; 802. scraper mounting frame; 803. scraper body;
900. printed object; 901. solid structure; 9011. contour portion; 9012. filling portion; 9013. outer surface layer; 9014. inner layer; 902. sacrificial structure; 9021. bottom plate: 9022. support; 904, sub-area; 905, gap;
1000. printing material.

### Detailed Description of the Embodiments

In order to make the objectives, technical solutions and advantages of the embodiments of present invention clearer, a clear and complete description of technical solutions in the embodiments of the present invention will be given below, in combination with the drawings in the embodiments of the present invention. Apparently, the embodiments described below are merely a part, but not all, of the embodiments of the present invention. All of other embodiments, obtained by those of ordinary skill in the art based on the embodiments in the present invention without any creative effort, fall into the protection scope of the present invention.

It should be noted that similar reference signs and letters denote similar items in the following figures, so once a certain item is defined in one figure, it does not need to be further defined or explained in subsequent figures.

It should be noted that in the case of no conflict, features in the embodiments of present invention can be combined with each other.

The 3D printing technology is to manufacture a three-dimensional entity in a layer-by-layer stacking manner via a 3D printing apparatus according to three-dimensional model data of an object. The 3D printing technology can overcome problems in terms of special structure that is unable to be formed by conventional mechanical processing at present, and implement simple production of any components with complex structures. The existing 3D printing technology includes laser stereolithography apparatus (SLA), digital light processing (DLP), liquid crystal display (LCD) technology, fused deposition modeling (FDM), poly jet molding (PolyJet), multi-jet printing (MJP) molding, multi-jet fusion (MJF) molding, selective laser sintering (SLS), etc.

In some related arts, a dispenser applies a liquid photopolymer layer onto a building tray, then the entire building tray is irradiated with ultraviolet light to cure the liquid photopolymer layer applied on the tray, the building tray is lowered by one forming layer thickness, the dispenser continues to apply the liquid photopolymer to print and cure the next layer, and the 3D printing of a model is completed in a repeated manner. In this printing manner, after a printing material is ejected from a linear dispenser, a light source immediately follows the dispenser to expose, polymerize and cure the liquid photopolymer layer on the building tray without difference, the printing precision and the printing quality thereof depend on the size precision of the dispenser, the smaller the size of the dispenser is, the fewer the applicable printing materials are, such that the printing precision is not high, the printing quality is poor, and the selection for the printing materials is single.

In some related arts, after a photo-curing 3D printer prints a single-color object, the object is colored by a subsequent coloring method, this printing manner is very single, and the steps are tedious; and in addition, residual materials generated during a printing process, such as uncured resins or residues in the previous layer processing, will affect the printing of the next layer, resulting in poor printing quality and a poor effect.

In some related arts, a printing platform is moved between different carrying mechanisms by a plurality of material carrying mechanisms and a Z-axis translation mechanism capable of driving the printing platform to move, so that a plurality of materials can be printed on one printed object. However, in the method, each layer is in a uniform single color in fact, but single-layer multi-color printing cannot be realized, and there is a risk of material-mixing pollution during the printing process.

In some related arts, lattice cells are disposed on a release film, then a resin distributor is provided, a lattice cell in each layer of image projection and a resin with desired color are determined by a computer, the resin distributor is controlled to inject resin into a corresponding lattice region, and then one layer is exposed and cured. Then, the lattice cell is washed by a cleaning portion and blow-dried, and the printing of the next layer is performed. Repetition is performed to complete color printing. However, in this technology, after the printing of each layer is completed, post-processing of the printed object needs to be performed, so as to stabilize the color printed on the present layer, such that the procedures are complex, and the printing efficiency is low.

In some related arts, a three-dimensional model printed by a three-dimensional printing apparatus is provided with a support, a body is supported by the support during the printing process, and after the printing of the three-dimensional model is completed, the support needs to be removed. However, in the related arts, the support and the body are prepared from the same printing material, so it is relatively toilsome during the process of removing the support, and it is not easy to completely remove the support.

In some related arts, during the printing process of the three-dimensional printing apparatus, in a case where a supporting material is different from a body material, a mutual infiltration phenomenon occurs, so that it is difficult to remove the cured support, resulting in poor quality of a solid surface of the printed object, and it is necessary to perform dull polish and oil polish on the body surface of the printed object subsequently.

In order to improve at least one defect in the above related arts, embodiments of the present invention provides a three-dimensional printing apparatus and a three-dimensional printing method, which can supply two or more printing materials in single-layer printing, and provide different printing materials in different regions of a three-dimensional model to meet production requirements, thereby facilitating to improve the efficiency and reduce the labor cost. To facilitate the understanding of the three-dimensional printing method provided in the embodiments of present invention, the three-dimensional printing apparatus provided in the embodiments of present invention will be first introduced below.

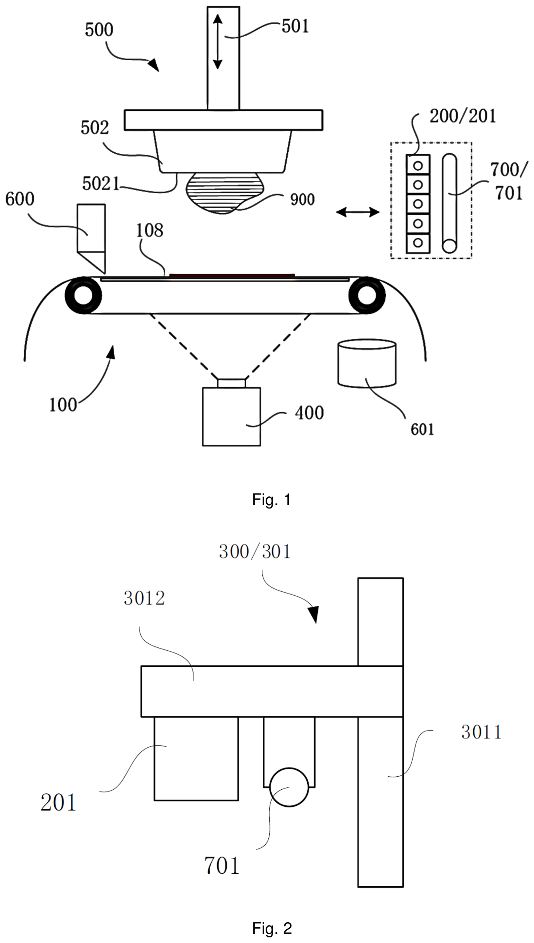

As shown in Fig. 1, the primary components of the three-dimensional printing apparatus in an embodiment of present invention include a material carrying mechanism 100, a supplying mechanism 200, a driving mechanism 300, an optical mechanism 400, and a forming platform mechanism 500, wherein the material carrying mechanism 100 is light-transmissive and has a carrying area 108 configured to carry a printing material; the supplying mechanism 200 has a supplying assembly 201 configured to quantitatively supply a plurality of types of printing materials; the driving mechanism 300 is configured to realize a relative movement between the carrying area 108 and the supplying assembly 201, so that the supplying mechanism 200 quantitatively supplies a preset type of printing material at a preset position of the material carrying mechanism 100; the optical mechanism 400 is configured to project light and expose the printing materials in the carrying area 108, so that the printing materials are subjected to a photo-curing reaction to form a printing model; and the forming platform mechanism 500 is configured to adhere, layer by layer, cured layers formed by curing the printing material and separate the cured layers from the carrying area of the material carrying mechanism.

Specifically, the forming platform mechanism 500 includes a first elevator assembly 501 and a forming platform 502, wherein the forming platform 502 has a forming surface 5021, the forming surface 5021 is used for attaching a printed object, and the forming platform 502 moves in a reciprocating manner on a path approaching to or away from the material carrying mechanism 100; the first elevator assembly 501 is used for driving the forming platform 502 to ascend and descend, so that the forming platform 502 moves close to or away from the material carrying mechanism 100; the forming surface 5021 of the forming platform 502 is generally a surface of the forming platform 502 on a side facing the material carrying mechanism 100, so as to be opposite to the carrying area 108 of the material carrying mechanism 100; and during a printing process, the printed object can be cured on the forming surface 5021 layer by layer. In the layer by layer forming process of the printed object, the forming platform 502 gradually rises to separate the formed printed layer, and the layers are stacked layer-by-layer to finally complete the printing of the printing model.

Specifically, the material carrying mechanism 100 is made of a transparent material, the carrying area 108 of the material carrying mechanism 100 is used for carrying the printing material, the optical mechanism 400 can be disposed below or above the material carrying mechanism 100 corresponding to the carrying area 108, and is preferably disposed below the carrying area 108; the carrying area 108 and the forming platform 502 are correspondingly located above or below the optical mechanism, and are preferably located above the optical mechanism; it should be noted that it is not necessary to keep the optical mechanism 400 below the material carrying mechanism 100 all the time or below the forming platform 502, the optical mechanism 400 can be located above the material carrying mechanism 100 and the forming platform 502; and the optical mechanism 400 can emit a light beam, and the light beam passes through a transparent area of the material carrying mechanism 100 and then reaches the carrying area 108, so that the printing material in the carrying area 108 is cured. When 3D printing is performed, the forming platform 502 gradually approaches to the carrying area 108 of the material carrying mechanism 100 under the driving of the first elevator assembly 501, and the forming surface 5021 is attached to an upper surface of the printing material in the carrying area 108, the light of the optical mechanism 400 irradiates into the printing material in the carrying area 108 after passing through the light-transmissive area, so that the printing material located between the material carrying mechanism 100 and the forming surface 5021 is cured, and is cured on the forming surface 5021 of the forming platform 502 or cured on a previous layer of printing material that has been cured on the forming surface 5021, and the printing materials are stacked layer by layer to realize the printing of the model.

It should be noted that the optical mechanism 400 enables the printing and curing manners to be applicable to various photo-curing principles in the prior art, and an optical system of the optical mechanism 400 includes, but is not limited to, any one of a DLP projection system, a Micro-LED display system, an LCOS optical system, an LCD display system, or a laser galvanometer scanning system, which can be reasonably selected by those skilled in the art as needed.

In the above implementation, under the action of the driving mechanism 300, a relative movement of the supplying assembly 201 of the supplying mechanism 200 and the carrying area 108 of the forming platform 502 is allowed, so that the supplying assembly 201 can be located at any position of the carrying area 108, so as to realize the supply of the printing material at any position of the carrying area 108. The supplying mechanism 200 can supply the plurality of types of printing materials to the carrying area 108 through the supplying assembly 201, so that required types of printing materials can be correspondingly supplied at different positions of the carrying area 108 as needed. That is, the supplying assembly 201 can supply at least two different types of printing materials, so that color printing can be realized, and the printing of different performance requirements can also be realized. For example, when color printing is required, the colors of printing materials supplied at different positions can be adjusted and controlled by a color control solution, so as to realize the color printing. According to the three-dimensional printing apparatus in the above implementation of the present invention, printing materials with required colors can be supplied at corresponding positions of the carrying area 108 according to color requirements of a product during the printing process, a required printed object is directly obtained after the printing is completed. Compared with the technical solution in the related arts in which a single-color is printed by a photo-curing 3D printer and subsequently colored by a coloring method, a function of directly printing colors is realized, moreover, the steps are simple, the printing quality is better, and the colors are more realistic.

Compared with the technical solution in the related arts in which a plurality of material carrying mechanisms are provided and a printing platform is moved among different material carrying mechanisms to realize one printed object consisting of a plurality of materials, the three-dimensional printing apparatus provided in the above implementation of the present invention can realize the printing of a plurality of materials in a single layer, and can reduce the risk of material mixing pollution during the printing process. Moreover, in the photo-curing technology using a projection manner, the edge of the printed object is directly cured by using a projection contour of a projection plane, therefore the precision of the edge of the printed object depends on the precision of a projection image of the optical mechanism, which leads to a higher printing precision compared with ink-jet printing. Since the printing precision does not depend on the size precision of the nozzle of the dispenser, the requirements for the size of the nozzle of the dispenser are not necessary too high, as long as the printing materials can be quantitatively ejected according to the technical solution, in other words, the size of the nozzle can be greater than the size of the nozzle of the dispenser for ink-jet printing, so as to adapt to more printing materials with different viscosities, thereby realizing the printing of more colors or performance requirements. In addition, compared with overhead projection printing, bottom projection printing is preferred, and bottom projection lifting printing requires fewer supports than overhead projection sinking printing, thereby saving more materials.

In some implementations, the three-dimensional printing apparatus further includes a leveling mechanism 700, the leveling mechanism 700 is configured to maintain, within a preset range, a thickness of the printing material supplied on the material carrying mechanism 100 by the supplying mechanism 201. The leveling mechanism 700 can maintain a uniform thickness for the printing material on the carrying area 108 supplied by the supplying assembly 201, so that the printing process is kept refined and accurate, and thus the printing precision is improved. It should be noted that, if the printing material supplied in the carrying area by the supplying assembly 201 is uniform enough and quantitative, it is not necessary to perform leveling by the leveling mechanism 700. During the above process, in addition to controlling the thickness of the printing material on the material carrying mechanism 100 to be kept within the preset range, the leveling mechanism 700 can be further used for slightly adjusting the amount of the printing material on the material carrying mechanism 100, and has the function of scraping the printing material, so that the surface of the printing material is more flat.

It should be noted that a relative position between the leveling mechanism 700 and the material carrying mechanism 100 in a vertical direction needs to change along with a change in a relative position between the supplying assembly 201 and the material carrying mechanism 100, so as to prevent interference between the leveling mechanism 700 and the supplying assembly 201, therefore a relative position relationship between the leveling mechanism 700 and the carrying area of the material carrying mechanism 100 can also be adjusted by the driving mechanism 300, so that the leveling mechanism 700 and the supplying assembly 201 can move relative to the material carrying mechanism 100 in the vertical direction or a horizontal direction at the same time. Of course, an independent driving structure can also be selected to control the relative movement between the leveling mechanism 700 and the carrying area 108, but it is preferable to adjust the relative movement between the leveling mechanism 700 and the carrying area 108 through the foregoing driving mechanism 300 from the consideration of structural simplification and space utilization of the whole machine.

Optionally, the leveling mechanism 700 includes a leveling assembly 701, the leveling assembly 701 is mainly used for maintaining, within the preset range, the thickness of the printing material supplied on the material carrying mechanism 100 by the supplying mechanism 200, the leveling assembly 701 includes, but is not limited to, any of a scraper assembly 800, a leveling roller assembly, a roller assembly or a push rod assembly, and of course, the leveling assembly 701 can also be any other device capable of realizing leveling.

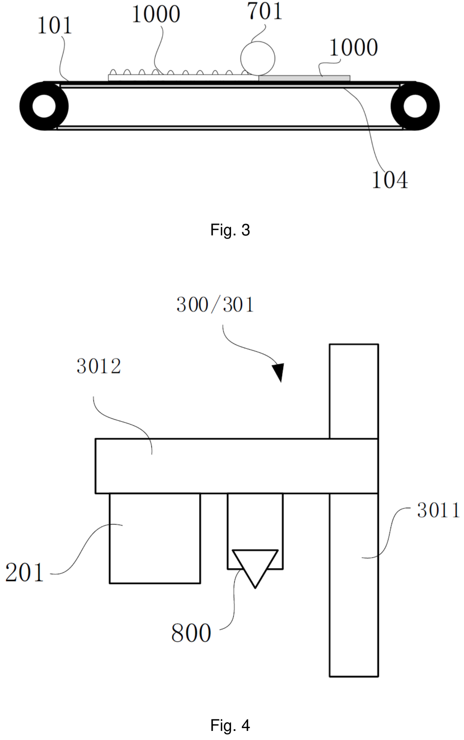

In some implementations, as shown in Fig. 2 and Fig. 3, the leveling assembly 701 can include at least one leveling roller assembly, the leveling roller assembly is used for leveling uncured printing material supplied to the carrying area on the material carrying mechanism 100, so as to ensure the size precision of the material layer in the vertical direction. Specifically, the leveling roller assembly can be a columnar component capable of rotating around a mounting shaft thereof, and can also be a conical component capable of rotating around a mounting shaft thereof. The leveling roller assembly rotates at a high speed during a leveling process and is in contact with uncured printing material 1000 on the material carrying mechanism 100, so that the size precision of the material layer in the vertical direction is ensured by removing the printing material higher than a preset thickness on the uncured material layer. In Fig. 3, the leveling roller assembly moves from right to left relative to a transparent film 101, and after a leveling procedure of the leveling roller assembly, the printing material 1000 on a rear side of the leveling roller assembly are leveled to the same thickness. Those skilled in the art adjust the removal effect of the printing material by the characteristics of the leveling roller assembly itself and movement parameters of the leveling roller assembly. For example, the adsorption effect of the printing material can be increased by increasing the surface polarity or roughness of the leveling roller assembly, and thus the printing material can be better brought away. As another example, the entrainment effect of the leveling roller assembly on the printing material can be improved by increasing the rotating speed of the leveling roller assembly, so that the printing material exceeding the preset thickness can be taken away by the leveling roller assembly, thereby reducing the possibility of material mixing resulting from flatly pushing the printing material exceeding the preset thickness to other areas. As another example, a material coating capable of brought away remaining material can be configured on the leveling roller assembly, so as to quickly adsorb and remove the remaining material.

In some implementations, a leveling roller is designed to be a conical structure, the structure is suitable for a situation in which the supplying assembly 201 remains stationary during a rotary printing process, drop points of the printing material are different in a radial position, and relative linear speeds are also different, in this case, the leveling and material-taking capability requirements of the leveling assembly 701 are also different, and a variable diameter of the leveling roller with the conical structure can realize a linear material-taking capability to match linear speed changes during the rotary printing process.

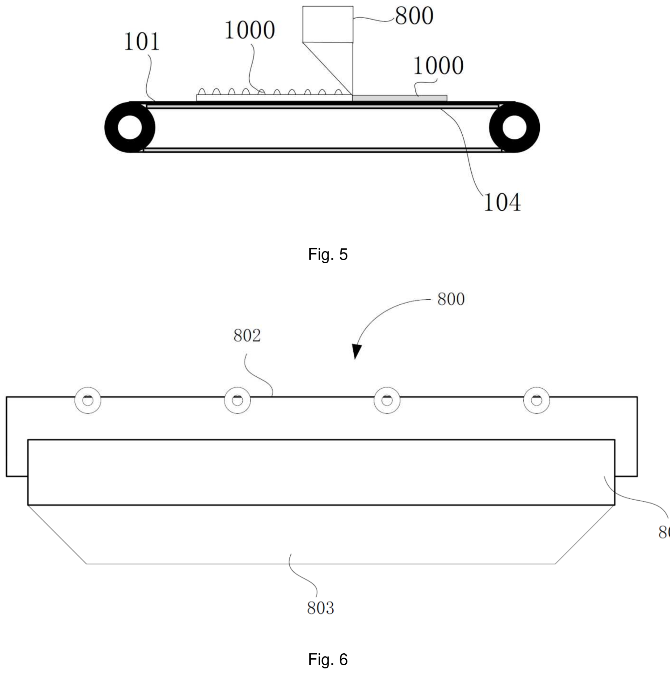

In some implementations, as shown in Fig. 4 and Fig. 5, the leveling assembly 701 can include at least one scraper assembly 800. As shown in Fig. 6, the scraper assembly 800 includes a scraper blade holder 801, a scraper mounting frame 802 and a scraper body 803, an elastic connecting assembly for connecting and buffering is disposed between the scraper blade holder 801 and the scraper mounting frame 802, the scraper body 803 is disposed on the scraper blade holder 801, and the scraper mounting frame 802 can be connected with the driving mechanism 300; the scraper assembly 800 moves with respect to a corresponding position of the carrying area 108 of the material carrying mechanism 100 through the driving mechanism 300, the movement direction of the relative movement is parallel to the surface of the material carrying mechanism 100, that is, during the relative movement process, the distance between a bottom end of the scraper body 803 and the surface of the printing material is almost kept unchanged, the direction of the relative movement can include relative translation in a length direction of the material carrying mechanism 100 or relative translation in a width direction of the material carrying mechanism 100, the above relative movement aims to solve the problem that the distribution of the printing material supplied to the material carrying mechanism 100 by the supplying assembly 201 is non-uniform due to the poor fluidity of the printing material 1000, and thus affecting the printing quality. In Fig. 5, the scraper assembly moves from right to left relative to the transparent film 101, and after the leveling procedure of the scraper assembly 800, the printing material 1000 on the rear side of the scraper assembly 800 is leveled to the same thickness. The scraper assembly 800 can overcome the problem of poor fluidity of the printing material 1000, so that the printing material fully covers of the carrying area 108 of the material carrying mechanism 100, so as to level the thickness of the printing material of a single printing layer.

It is discovered during a production process that the leveling assembly 701 may bring the printing materials in one area into another area during a working process, such that the materials may be mixed in the next area, resulting in pollution of the printing material, and thus affecting the precision and effect of the printing. It is taken as an example that the leveling assembly 701 is the scraper assembly 800, during a supplying process of the supplying assembly 201 from right to left, it is assumed that the printing materials in the carrying area 108 are divided into a plurality of color areas, when the scraper body 803 of the scraper assembly 800 passes through the first color area and scrapes away excessive wastes, the wastes in the first color area are pushed to the second color area, resulting in material mixing and color mixing. Based on this, in addition to the leveling assembly 701, the leveling mechanism 700 further includes a waste collection assembly, wherein the waste collection assembly is configured to collect wastes removed by the leveling assembly 701 during the working process of the leveling assembly 701, so as to ensure that no waste enters the material carrying mechanism 100 again.

It is still taken as an example for description that the leveling assembly 701 is the scraper assembly 800, during the supplying process of the supplying assembly 201 from right to left, it is assumed that the printing materials in the carrying area 108 are divided into a plurality of color areas, and when the scraper body 803 of the scraper assembly 800 passes through the first color area and scrapes away the excessive wastes, the wastes scraped by the scraper body 803 are collected by the waste collection assembly, so as to prevent the wastes from entering other color areas to affect the color precision of the other color areas.

The specific form of the waste collection assembly includes, but is not limited to, a negative pressure suction structure and a wiping structure, as long as the wastes removed by the leveling assembly 701 can be collected in time. The faster the response of the waste collection assembly is, the less the material mixing and color mixing between different areas.

In some implementations, the leveling mechanism 700 can be disposed at any position of the material carrying mechanism 100, as long as the printing materials can be leveled to the preset thickness. A plurality of leveling mechanisms 700 can be provided, and the plurality of leveling mechanisms 700 work at the same time, thereby improving the working efficiency.

In some implementations, as shown in Fig. 1, the three-dimensional printing apparatus further includes a cleaning mechanism 600, the cleaning mechanism 600 is configured to remove residual printing material on the material carrying mechanism 100 after the forming platform mechanism separates the cured layer, and is specifically used for removing the residual printing material on the carrying area 108 after the forming platform mechanism 500 separates the cured layer. Optionally, the cleaning mechanism 600 is further configured to remove the residual printing material on the cured layer, and is specifically used for removing the residual printing material on the cured layer after the forming platform mechanism 500 separates the cured layer. The cleaning mechanism 600 can remove the residual printing material after each separation of the cured layer by the forming platform mechanism, and can also remove the residual printing material at a specific time after the forming platform mechanism separates the cured layer. For example, when a sacrificial mechanism or a bottom plate structure is printed, the residual printing material does not need to be removed since the printing quality of a solid portion is not affected, thereby improving the printing efficiency. The residual printing material can also be not removed when the material of the same color or performance is printed, and the residual printing material is removed when the material is converted into materials of other colors or performances, so as to avoid color mixing or material mixing to affect the printing quality. Specifically, reasonable settings can be performed according to the requirements of the technical solutions in the art. In the present embodiment, the mechanisms of the three-dimensional printing apparatus cooperate with each other to form the printing materials into a required printed object 900. The cleaning mechanism 600 can avoid the situation in which residual materials, such as upper-layer uncured resin or residues, generated during the printing process affects the printing of the next layer. Of course, the cleaning mechanism 600 can also avoid the situation in which cured resin or residues generated during the printing process affects the printing.

In some implementations, the cleaning mechanism 600 can be a scraper assembly 800, a high-pressure air gun, a wiping assembly 602, or any structure capable of cleaning the material carrying mechanism 100.

In some implementations, the cleaning mechanism 600 can have an independent control system and can also share a control system with the dispenser assembly/leveling mechanism. It can move alone and can also move along with the dispenser assembly/leveling mechanism. For example, after the dispenser assembly ejects the printing material, the leveling mechanism levels the printing material, and the forming platform mechanism descends for exposing and curing, and after separating the cured layer, the cleaning mechanism performs cleaning while the dispenser assembly/leveling mechanism resets; or, the cleaning mechanism first cleans residual resin in the carrying area, and the dispenser assembly/leveling mechanism subsequently eject and level the printing material.

Optionally, the cleaning mechanism 600 is a high-pressure air gun, and uncured printing material or residues on the material carrying mechanism 100 can be blown away by the high-pressure air gun after every curing. Correspondingly, the side of the material carrying mechanism 100 where the high-pressure air gun is disposed is provided with a purging opening, an air outlet of the high-pressure air gun directly faces the purging opening for purging the uncured printing material or residues, and in addition, the high-pressure air gun can be further used for purging cured printing material or residues.

Optionally, the cleaning mechanism 600 is a scraper assembly 800, the scraper assembly 800 can move relative to the carrying area 108 through the action of the driving mechanism 300, and redundant printing material and residues are scraped away from the material carrying mechanism 100 after the printing material is cured. The specific structure of the scraper assembly 800 can refer to the description of the scraper assembly 800 of the leveling assembly 701, and thus details will not be described herein again. The two scraper assemblies have the same structure and working principle, and the only difference lies in that the scraper assembly 800, when serving as the leveling assembly 701, is used for scraping the portions of the printing material exceeding the preset thickness, and the scraper assembly 800, when serving as the cleaning mechanism 600, is used for scraping all uncured printing material and residues on the material carrying mechanism 100.

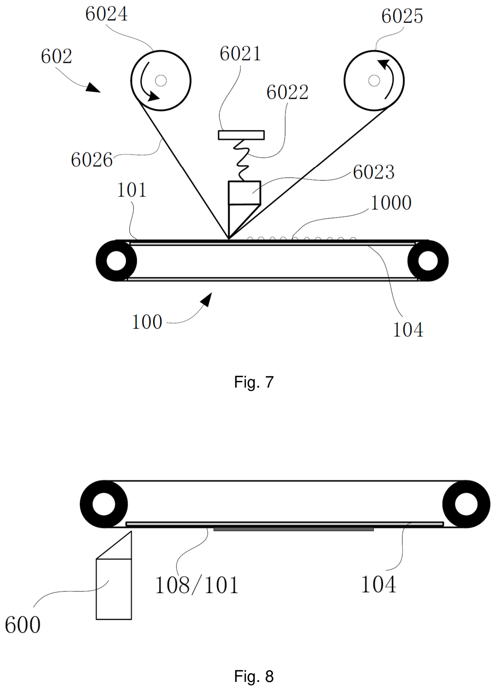

Optionally, as shown in Fig. 7, the cleaning mechanism 600 is a wiping assembly 602, the wiping assembly 602 is located above the material carrying mechanism 100, the wiping assembly 602 includes a fixed part 6021, an elastic member 6022, a movable member 6023, an material feeding roller 6024, and a material collection roller 6025, and the elastic member 6022 is provided such that the movable part 6023 tends to move towards the material carrying mechanism 100. The material feeding roller 6024 and the material collection roller 6025 are respectively located on two sides of the movable part 6023 and are both used for winding a dust-free cloth 6026, during the working process, the dust-free cloth 6026 bypasses a lower end of the movable part, the relative movement between the wiping assembly 602 and the material carrying mechanism 100 can be realized by the driving mechanism, so that the carrying area 108 is located directly below the movable part 6023, the dust-free cloth 6026 on the movable part 6023 is in contact with the residual material on the carrying area 108, and the dust-free cloth 6026 completes the adsorption and wiping works of the residual material. Under the action of an elastic force of the elastic member 6022, the movable part 6023 abuts against the material carrying mechanism 100, the elastic member 6022 provides the elastic force to ensure the close contact between the dust-free cloth 6026 and the material carrying mechanism 100, and meanwhile a further deformation space can be reserved by the elastic member 6022, thereby realizing flexible wiping, and protecting the carrying area 108 on the basis of completing wiping, thus avoiding a pressure damage during wiping. In addition, preferably, the dust-free cloth can be a disposable consumable, so that the cleaning and maintenance of the cleaning mechanism can be reduced, and the printing efficiency can be improved. Further, the material feeding roller 6024 is used for winding a material feeding of the dust-free cloth 6026, the material collection roller 6025 is used for collecting the dust-free cloth 6026 after the wiping is completed, the material collection roller 6025 is used for providing a driving force to drive the dust-free cloth 6026 to move, and the dust-free cloth 6026 on the material feeding roller 6024 is recycled by the material collection roller 6025 after passing through the movable part 6023. Further, as shown in Fig. 8, the cleaning mechanism 600 further includes an overturning assembly, the overturning assembly is used for turning over the carrying area 108 of the material carrying mechanism 100, so as to change a state in which the printing material is located above the carrying area 108 into a state in which the printing material is located below the carrying area 108, and thus the uncured printing material and residues naturally fall off under the assistance of the gravity, or the cured printing material and residues naturally fall off under the assistance of the gravity, and in addition, the scraping effect of the scraper assembly 800 or the purging effect of the high-pressure air gun can be further assisted to remove the uncured printing material and residues more easily and to remove the cured printing material and residues more easily. Preferably, a substance such as alcohol can be applied to the dust-free cloth 6026, so that the dust-free cloth 6026 in operation can execute a cleaning action in the presence of the alcohol, and thus the generation of static electricity can be prevented while cleaning is performed.

In some implementations, as shown in Fig. 1, the cleaning mechanism 600 further includes a waste accommodating device 601, and the waste accommodating device 601 is used for storing the uncured printing material or residues removed from the material carrying mechanism 100 by the cleaning mechanism 600. The waste accommodating device 601 can be various containers available for storage.

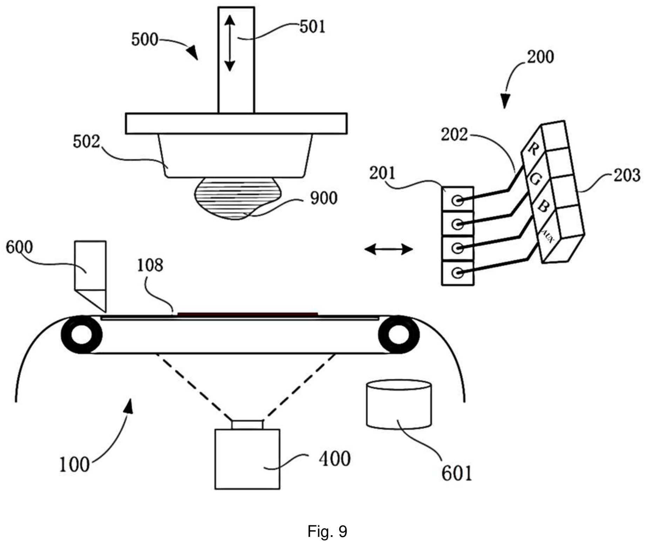

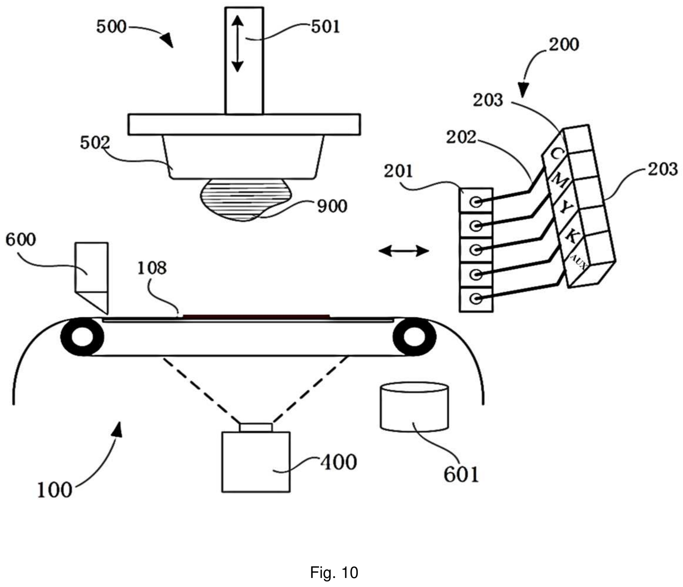

In some implementations, as shown in Fig. 9 and Fig. 10, the supplying mechanism 200 is used for supplementing and supplying the printing materials to the carrying area 108 of the material carrying mechanism 100, the supplying mechanism 200 at least includes a material storage assembly 203, a pump, pipelines 202 and the supplying assembly 201, wherein the material storage assembly 203 is used for storing the printing materials, the material storage assembly 203 includes a plurality of material storage portions, which are respectively used for storing different types of printing materials; the pump is used for providing a driving force to pump the printing materials in the material storage assembly 203 to the supplying assembly 201 through the pipelines 202, and in addition, the supply amount of the printing materials can also be controlled by the pump; and the supplying assembly 201 is used for supplying the printing materials to preset positions of the material carrying mechanism 100. The supplying assembly 201 is preferably a dispenser assembly, the dispenser assembly can include one or more dispensers, dispenser orifices on the dispenser are connected with the material storage portions by the pipelines, and the supply of the plurality of types of printing materials can be realized by the dispenser assembly. Specifically, one dispenser can correspond to one or more supplying channels. For example, one dispenser can be provided with only one supplying channel, and thus can supply one type of printing material; as another example, one dispenser can be provided with two, four, or eight supplying channels, each channel can supply one type of printing material. Of course, one type of printing material can also be supplied by a plurality of supplying channels.

For example, by the plurality of supplying channels provided by the dispenser assembly, printing materials of different colors can be ejected to the carrying area 108 of the material carrying mechanism 100, so as to print a colored model, thereby eliminating the procedures of subsequent coloring of the model. The printing materials of different colors are stored in different material storage portions of the material storage assembly, different supplying channels communicate with the material storage portions storing the printing materials of different colors, and the printing materials of different colors are ejected by different supplying channels of the dispenser assembly by using the pump, so as to eject the printing materials on the carrying area 108 of the carrying mechanism 100 during the printing process.

For specific color management, the supplying amounts of different types of printing materials can be controlled by software, and the printing materials can be blended into any color, so that the color can be changed freely during the printing process, to realize gradient-color printing, pattern-alternating printing or transparent and semi-transparent color-alternating printing, and thus diversified requirements on the market can be better met. Optionally, a printing material color control strategy can be generated by digitally combining model materials of other colors for use by a printer, for example, cyan, carmine and yellow (CMY) printing materials can be used as a combination, an RGB color system as shown in Fig. 9 can also be utilized, and the RGB color system can be converted into a CMYK color system as shown in Fig. 10. The printing materials corresponding to basic colors in the color systems are stored in different material storage portions, and the printing materials corresponding to the basic colors are supplied by the dispenser of the dispenser assembly and are combined to obtain various colors in color spectra corresponding to the color systems. In addition, the color management can also be performed by changing color components, size of droplet of the printing material, color sequences of the printing materials, and the stacking manner of the printing materials, which can be flexibly selected by those skilled in the art, and thus details will not be described herein again.

In some implementations, the three-dimensional printing apparatus further includes a calibration system, the calibration system includes a camera device, a calibration device and a calibration plate, and the calibration system is used for performing calibration on at least one of the optical mechanism 400 and the supplying assembly 201, so as to improve the accuracy of the printing process.

Before printing, optical calibration can be performed on the optical mechanism 400 at first, specifically, the calibration plate of the calibration system is placed on the carrying area 108 of the material carrying mechanism 100 of the three-dimensional printing apparatus, and calibration points distributed according to a preset distance are formed on the calibration plate; an optical engine of the optical mechanism 400 is disposed below the material carrying mechanism 100, and is used for projecting, to the carrying area 108 of the material carrying mechanism 100, actual projection points distributed according to the preset distance; the camera device is used for photographing the calibration points on the calibration plate and the actual projection points on the carrying area 108 of the material carrying mechanism 100; the calibration device is in communication connection with the camera device, the calibration device generates correction information according to offsets between the calibration points and the actual projection points for guiding the optical mechanism 400 to perform position correction, until the obtained calibration points and the actual projection points maintain a consistent relative position, and the relative position is preferably overlapping, and certainly, the relative position can also be non-overlapping. The preset distance distribution can be matrix distribution, linear distribution, star array distribution, or any other distribution manners capable of realizing coordinate position information, as long as a positional relationship among the calibration plate, the projection points and photographed points can be determined.

Before printing, after the calibration of the optical mechanism 400 is completed, the calibration of the supplying assembly 201 can be continued to correct the relative position between the projection of the optical mechanism 400 and the movement of the supplying assembly, and in the present embodiment, it is taken as an example for description that the supplying assembly is a dispenser assembly. Specifically, the dispenser of the dispenser assembly is firstly controlled to eject the printing material to the carrying area 108 so as to form liquid droplet points, the liquid droplet points are formed in a projection area formed after the projection of the optical engine of the optical mechanism 400, then coordinates of the ejected liquid droplet points are captured by the camera device and are compared with the previously recorded coordinates of the calibration points of the optical mechanism 400 with the position calibrated, so as to adjust the position of the dispenser for calibration. One dispenser assembly can generally include a plurality of rows of dispensers, and the relative positions of the plurality of rows of dispensers are fixed, therefore one dispenser assembly only needs to be calibrated once, and if there are a plurality of dispensers, one of the dispensers is calibrated first, and the other dispensers are adjusted with the calibrated dispenser as a reference and are kept parallel to the calibrated dispenser and are fixed.

In some implementations, the three-dimensional printing apparatus further includes a calibration system, and the calibration system is configured to calibrate and align a supplying point of the supplying assembly and a projection point of the optical mechanism.

In some implementations, the material carrying mechanism 100 at least includes one layer of transparent film 101, and the carrying area 108 is formed on the transparent film 101 for carrying the printing materials. In order to reduce an adhesive force between the cured layers and the material carrying mechanism 100 to easily separate the cured layers, the transparent film 101 is preferably a release film. The release film includes, but is not limited to, any one of a fluorine-containing polymer film, a polydimethylsiloxane (PDMS) film, and a polymethylpentene (PMP) film, wherein the fluorine-containing polymer film includes, but is not limited to, at least one of an FEP film, an nFEP film, a PTFE film, an ETFE film, a PFA film, a PVDF film, a PVF film, and a PCTFE film. In other implementations, the transparent film 101 can also be a composite release film formed by stacking a base layer and a plastic layer, wherein optional examples of the material of the plastic layer can include, but are not limited to: one or a combination of more of polyethylene (PE), polyethylene glycol terephthalate (PET), polybutadiene formal (PBT), thermoplastic polyurethane (TPU), polyamide or nylon (PA), polyimide (PI), polypropylene (PP), polyvinyl chloride (PVC), polymethyl methacrylate (PMMA), polystyrene (PS), polybutene (PB), polyformaldehyde (POM), polycarbonate (PC), polysulfone (PSU), polyphenylene ether (PPO), polyvinyl alcohol (PVA), polyacrylonitrile styrene (AS), acrylonitrile butadiene styrene (ABS), and fluororesin (FR), or a polymer of two or more randomly selected therefrom or a polymer blend formed by polymerizing monomers thereof or a block polymer or an interpenetrating network polymer. In some other implementations, the transparent film 101 can also use a film with high surface polarity, so that the printing materials made of a resin material are uniformly attached to the surface of the transparent film 101, and the film with the high surface polarity includes, but is not limited to, polycarbonate (PC), polyethylene glycol terephthalate (PET), an optical uniform film, and the like; in some other implementations, the transparent film 101 can further use a microporous film to assist in discharging bubbles caused by ink pressing between the printing materials, and the microporous film includes, but is not limited to, a PTFE film, an FEP film, and a PDMS film, and the like; and in some other implementations, the transparent film 101 can further use a polymer copolymer film, for example, a fluorine-containing polymer can be added into raw materials of some films with high polarity to increase the release effect.

In some implementations, in order to fix the transparent film 101, a film coating manner or a film stretching manner can be selected for fixing.

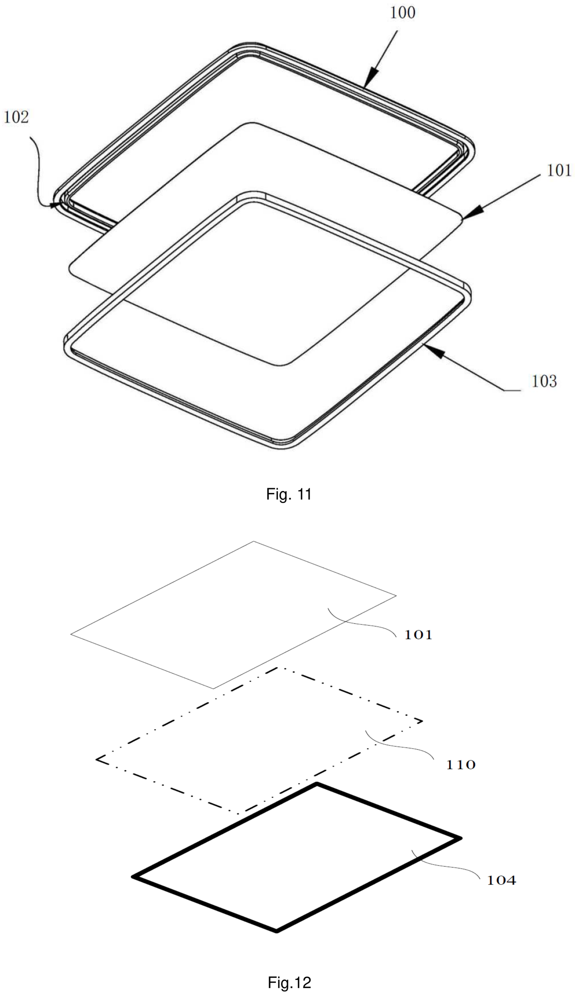

Optionally, as shown in Fig. 12, as one implementation of the film coating manner, the material carrying mechanism includes a transparent film 101, an intermediate layer 110 and an upper transparent plate 104, and the transparent film 101 is attached to the upper transparent plate 104 via the intermediate layer 110. Specifically, the transparent film 101 can be attached to the upper transparent plate 104 by electrostatic adsorption or pasting of the intermediate layer 110. The intermediate layer 110 is generally a silicone layer, glue, and adhesive, or the like. The upper transparent plate 104 is generally made of quartz, fused quartz, water-white glass, or any other hard materials that are basically transparent to the used wavelengths and have substantially good optical quality, and the transparent film 101 is supported on the basis of light transmission.

Optionally, as shown in Fig. 11, as one implementation of the film stretching manner, the material carrying mechanism 100 includes a transparent film 101 and a film frame, the film frame includes an upper film frame 102 and a lower film frame 103, and the transparent film 101 is tightly stretched and fixed between the upper film frame and the lower film frame 103. As shown in the figure, the upper film frame 102 and the lower film frame 103 are detachably connected, the transparent film 101 is fixed between the upper film frame 102 and the lower film frame 103, the transparent film 101 can be tensioned by the upper film frame 102 and the lower film frame 103, and when the transparent film 101 needs to be replaced, it is only necessary to disassemble the upper film frame 102 and the lower film frame 103, and the transparent film 101 can be taken off to be directly replaced.

Optionally, as one implementation of the film stretching manner, the material carrying mechanism 100 includes a transparent film 101 and a film frame, the film frame only includes an upper film frame 102, and the transparent film 101 is tensioned on the upper film frame. Specifically, after the transparent film 101 is tensioned, an edge thereof is fixed on the upper film frame 102, and the transparent film 101 can be specifically fixed on the upper film frame 102 in manners such as pasting or hot pressing.

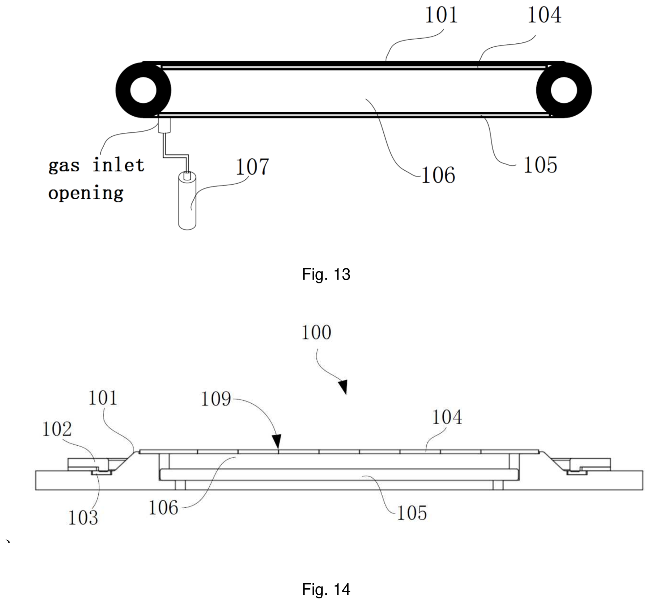

In the above implementations of the film stretching manner, the transparent film 101 is prone to stress deformation during the working process of the leveling mechanism 700 or the cleaning mechanism 600, therefore in order to improve the supporting effect of the transparent film 101, as shown in Fig. 13 and Fig. 14, the material carrying mechanism 100 further includes an upper transparent plate 104, and the upper transparent plate 104 is disposed below the transparent film 101. The upper transparent plate 104 is generally made of quartz, fused quartz, water-white glass, or any other hard materials that are basically transparent to the used wavelengths and have substantially good optical quality, and the transparent film 101 is supported on the basis of light transmission

Preferably, a fixing and constraining medium is disposed between the upper transparent plate 104 and the transparent film 101, and the fixing and constraining medium serves as a fixing and constraining surface, so that the transparent film 101 can be stably constrained on the upper transparent plate 104, thereby preventing the relative displacement of the transparent film 101 relative to the upper transparent plate 104 during the working process of the three-dimensional printing apparatus, which affects the printing progress and the printing precision. The specific material of the fixing and constraining medium includes one or more of a silicone layer, an adhesive layer, and a back adhesive layer.

Preferably, a first cavity is formed between the upper transparent plate 104 and the transparent film 101, and a fluid is introduced into the first cavity, so as to achieve the effects of preventing polymerization and reducing the separation force during the curing process of the printing materials on the transparent film 101. The fluid includes, but is not limited to, at least one of oxygen-rich liquid, inert liquid, oxygen, air, an oxygen-rich gas, and nitrogen. Specifically, the gas is preferably oxygen, air, an oxygen-rich gas, or the like. The liquid is preferably oxygen-rich liquid that is impermeable to the transparent film 101, and a polymerization inhibitor is preferably any one or a random combination of o-nitrophenol, hydroquinone, p-hydroxy benzaldehyde, p-phenylenediamine, p-tert-butylcatechol, and phenothiazine.

In some implementations, textures and micropores can also be disposed on the transparent film 101, and structures such as micropores 109 are disposed on the upper transparent plate 104 to improve the penetration rate of the fluid, thereby reducing the separation force and improving the printing efficiency. Specifically, for a material carrying mechanism in a film coating form, preferably, micropores 109 are formed on the upper transparent plate 104, so that fluid below the upper transparent plate 104 can pass through the upper transparent plate 104 to form contact with the transparent film 101.

In some implementations, the surface of the carrying area 108 of the transparent film 101 is coated with a polymerization inhibitor or inert liquid, and the inert liquid includes, but is not limited to, liquid perfluorocarbon and fluorine oil. During the working process of the three-dimensional printing apparatus, a layer of polymerization inhibitor or inert liquid can be supplied on the carrying area of the transparent film at first, and then the printing materials are supplied, the polymerization inhibitor or the inert liquid can change a separation process of the cured layer during the photo-curing printing process from solid-solid separation into solid-liquid separation, and can effectively reduce a drawing force during a release process and improve the printing speed and the printing area. Moreover, the printing interface is in a liquid state, so that timely heat dissipation can be performed during high-speed printing, so as to ensure the material stability.

In some implementations, as shown in Fig. 13 and Fig. 14, the material carrying mechanism 100 includes a transparent film 101, a gas supply assembly 107, an upper transparent plate 104 and a lower transparent plate 105, the upper transparent plate 104 is located below the transparent film 101, the lower transparent plate 105 is located below the upper transparent plate 104, a second cavity 106 is formed between the lower transparent plate 105 and the transparent film 101, and the gas supply assembly 107 is configured to introduce a gas into the second cavity 106, wherein the transparent film 101 can be fixed by the foregoing film stretching manner or the film coating manner, the upper transparent plate 104 is disposed below the transparent film 101 to support the transparent film 101 so as to avoid stress deformation, the lower transparent plate 105 of the material carrying mechanism 100 is used for forming the second cavity 106 with the upper transparent plate 104, and the second cavity 106 is used for inflating to reduce the separation force and improving the printing efficiency. Further, structures such as textures and micropores can also be disposed on the transparent film 101, and structures such as textures and micropores 109 can also be disposed on the upper transparent plate 104 to improve the penetration rate of the fluid, thereby reducing the separation force and improving the printing efficiency.

In addition, for the material carrying mechanism 100 in the film coating form, a micro-channel can be formed on the surface of the transparent film 101 by using a photolithography process, and a micropore structure is formed on the upper transparent plate 104 to improve the penetration rate of the fluid, thereby reducing the separation force.

In some implementations, the three-dimensional printing apparatus further includes a static electricity removal mechanism, the static electricity removal mechanism can be disposed on one side of the material carrying mechanism 100, the static electricity removal mechanism is used in cooperation with the transparent film 101, and when some films which are prone to generating static electricity are selected as the transparent film 101, the static electricity removal mechanism can be turned on to eliminate static electricity on the transparent film 101, so as to reduce the influence of static electricity on the material ejecting quality of the printing materials.

In present invention, the driving mechanism 300 implementing the relative movement between the supplying assembly 201 and the carrying area 108 of the material carrying mechanism 100 can generally include the following three implementation forms.

In some implementations, as shown in Fig. 2 and Fig. 4, the driving mechanism 300 includes a first driving assembly 301, the first driving assembly 301 is configured to drive the supplying assembly 201 to move in a space, and the carrying area 108 of the material carrying mechanism 100 remains stationary in the space. In this case, an initial position of the supplying assembly 201 is on one side of the material carrying mechanism 100, the leveling mechanism 700 is preferably installed on the first driving assembly 301 in general, specifically, during the working process, the supplying assembly 201 on one side of the material carrying mechanism 100 moves to the upper side of the carrying area 108 of the material carrying mechanism 100 under the action of the first driving assembly 301, so as to supply different types of printing materials to the carrying area 108 of the material carrying mechanism 100, then the leveling mechanism 700 levels the printing materials to the layer thickness of a single printing layer under the driving of the first driving assembly 301, the supplying assembly can also perform back-and-forth row staggered supplying under the driving of the first driving assembly 301, and after the leveling mechanism 700 levels the printing materials to the single-layer thickness, the supplying assembly 201 and the leveling assembly 701 can optionally return to the initial position for waiting under the action of the first driving assembly 301, so as to execute the supplying and leveling operations of the next printing layer. Specifically, the first driving assembly 301 can include a second elevator assembly 3011 and a translation assembly 3012, wherein the second elevator assembly 3011 is used for realizing a lifting movement in the vertical direction, the translation assembly 3012 is used for realizing a two-dimensional movement in the horizontal direction, the movement in the space can be realized by moving the second elevator assembly 3011 and the translation assembly 3012, and in a necessary case, one degree of freedom for rotating can also be increased by adding a rotating assembly to improve the flexibility of the movement in the space. The driving mechanism 300 can be a push rod, a slide rail, a linear module, and combinations thereof.

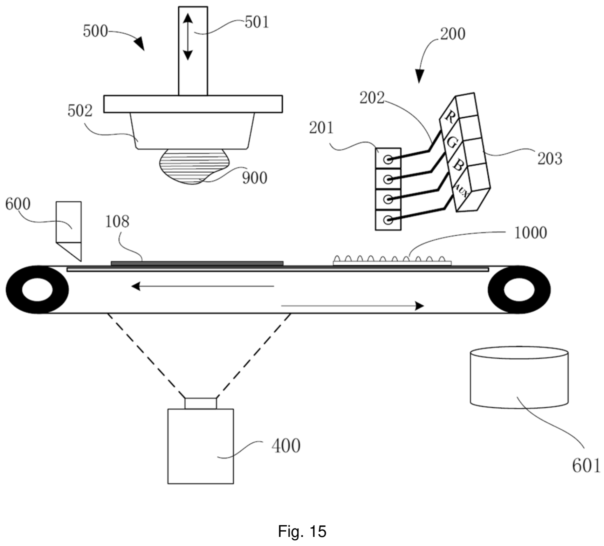

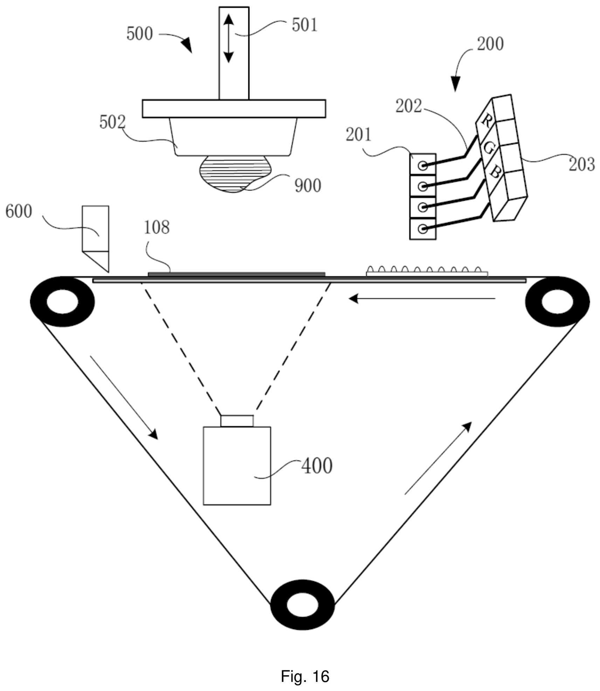

In some implementations, as shown in Fig. 15 and Fig. 16, the driving mechanism 300 includes a second driving assembly, the second driving assembly is configured to drive the carrying area 108 of the material carrying mechanism 100 to move in the space, the supplying assembly 201 preferably remains stationary in the space, and the leveling mechanism 700 and the cleaning mechanism 600 also preferably remain stationary in the space. In this case, the leveling mechanism 700 and the supplying assembly 201 are located on one side of the forming platform 502, and the cleaning mechanism 600 is located on the other side of the forming platform 502. Specifically, during the working process, the carrying area 108 moves to the lower side of the supplying assembly 201 under the action of the second driving assembly, the supplying assembly 201 supplies different types of printing materials to the carrying area 108 of the material carrying mechanism 100, then the carrying area 108 moves relative to the leveling mechanism 700 under the driving of the second driving assembly, the leveling mechanism 700 levels the printing materials to the layer thickness of a single printing layer, the carrying area 108 can also reciprocate under the driving of the second driving assembly to achieve the back-and-forth row staggered supplying of the supplying assembly, and after the leveling mechanism 700 levels the printing materials to the single-layer thickness, the carrying area 108 can move directly below the forming platform 502 under the action of the second driving assembly; then, the forming platform 502 descends to a layer thickness position of the printing materials to be attached to the printing materials, the optical mechanism 400 projects a printing pattern from the lower side to cure the printing materials, and after the curing is completed, the forming platform 502 ascends and separates and takes away the cured printing layer; and the carrying area 108 continues to move to the lower side of the cleaning mechanism 600 under the action of the second driving assembly, and the uncured printing materials and residues on the material carrying mechanism 100 are removed by the cleaning mechanism 600. Thereafter, the second driving assembly continues to drive the carrying area 108 to move to the lower side of the supplying assembly 201, and a printed object is printed and formed in a reciprocating manner. In the present implementation, the specific movement manner of the carrying area 108 under the action of the second driving assembly can be a reciprocating plane movement, and can also be a rolling cyclic movement as shown in Fig. 15 and Fig. 16, that is, the transparent film 101 forming the carrying area 108 circularly rotates in a conveyor belt manner.

Optionally, as shown in Fig. 15, the supplying mechanism 200 is located on the right side of the forming platform mechanism 500, the movement of the transparent film on the upper layer is right-to-left movement, the supplying mechanism on the right side firstly supplies the printing materials 1000 on the transparent film, then the transparent film drives the printing materials 1000 to move directly below the forming platform mechanism 500 to complete photo-curing and the separation of the cured layer, and then the cleaning mechanism 600 located above the leftmost side of the material carrying mechanism 100 acts to clean the residual printing materials into the waste accommodating device 601.

Optionally, as shown in Fig. 16, the supplying mechanism 200 is located on the right side of the forming platform mechanism 500, the movement of the transparent film on the upper layer can be a circular movement around the optical mechanism, the supplying mechanism on the right side firstly supplies the printing materials 1000 on the transparent film, then the transparent film drives the printing materials 1000 to move directly below the forming platform mechanism 500 to complete the photo-curing and the separation of the cured layer, and then the cleaning mechanism 600 located on the left side of the material carrying mechanism 100 acts to clean the residual printing materials into the waste accommodating device 601. In the present implementation, the transparent film circularly moves around the optical mechanism to avoid blocking an optical path of the optical mechanism.

In general, the movement path of the transparent film can be reasonably set according to the technical solutions or user requirements and is not limited to the left-right reciprocating movement, or the circular movement around the optical mechanism, and the settings are only required to avoid blocking the optical path of the optical mechanism. The position of the cleaning mechanism 600 is not limited to the left side, the right side, the upper side or the lower side of the material carrying mechanism, as long as the residual printing materials in the carrying area can be removed. Preferably, the cleaning mechanism is disposed below the material carrying mechanism 100, thereby being able to avoid the space above the material carrying mechanism 100 being too crowded, and the residual printing materials can also make full use of their own gravity to automatically fall off, thereby improving the cleaning effect.

In some implementations, the driving mechanism 300 includes a first driving assembly 301 and a second driving assembly, the first driving assembly 301 is configured to drive the supplying assembly 201 to move in the space, and the second driving assembly is configured to drive the carrying area 108 of the material carrying mechanism 100 to move in the space, so that both the supplying assembly 201 and the carrying area 108 can move in the space, and the superposition of the movements of the two realizes a relative movement effect of the supplying assembly 201 and the carrying area 108, the present implementation is a combination of the foregoing two implementations, and thus details will be not described herein again.

In the above implementations, the forming platform 502 does not need to be lift up higher than the supplying assembly 201, so that a large amount of movement time can be saved.

In some implementations, the supplying mechanism 200 further includes a heating assembly, the heating assembly is configured to heat the supplying assembly 201, so that a temperature of the supplying assembly 201 ranges from 20 °C to 100 °C. In other implementations, the heating assembly is configured to heat the supplying assembly 201, so that a temperature of the supplying assembly 201 is higher than 100 °C and not higher than 200 °C. The heating assembly can specifically be a lamellar heating structure, a filamentary heating structure, and the like, and the heating principle can be electric heating, infrared heating, microwave heating, and the like, which is not limited herein. Due to the influence of the ambient temperature on the forming quality of the printing materials and the higher viscosity of the printing materials at a low temperature during the printing, when the printing materials are used in some low ambient temperatures, the printing materials can be heated by the heating assembly, so as to ensure the normal operation of the printing. In the present implementation, by disposing the heating assembly, the printing materials in the supplying assembly 201 can be heated.

An embodiment of present invention further provides a three-dimensional printing method, which can be applied to the three-dimensional printing apparatus provided in the embodiments of present invention. The method in the present embodiment is to manufacture a three-dimensional object in a layered manner based on computer object data, and the three-dimensional object is manufactured in the layered manner by forming a plurality of layers presented in a configured pattern corresponding to the shape of the object. The computer object data can be presented in any known form, and the known form includes, but is not limited to: a standard tessellation language (STL) or a stereo lithography contour (SLC) format, a virtual reality molding language (VRML), an additional manufacturing file (AMF) format, a drawing exchange format (DXF), a polygon file format (PLY), a 3D manufacturing format (3MF), or any other formats suitable for computer aided design (CAD).

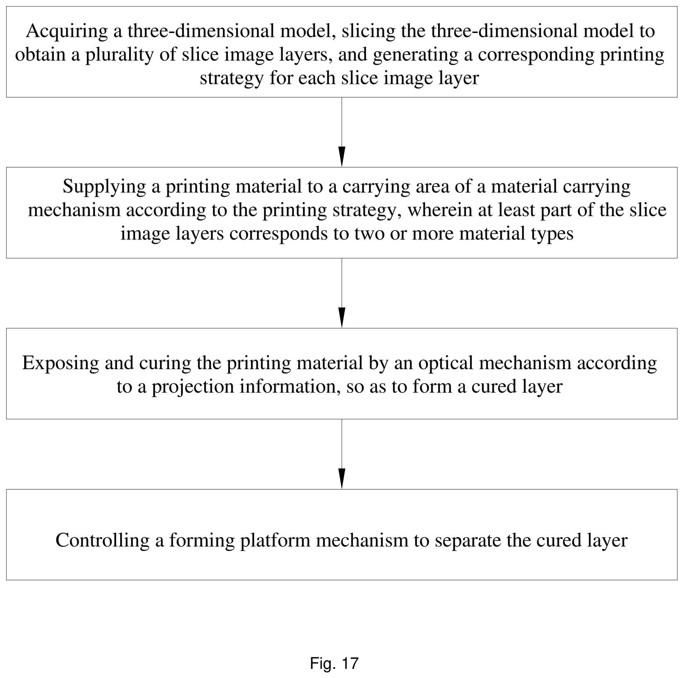

As shown in Fig. 17, the three-dimensional printing method includes:
Step 100: acquiring a three-dimensional model, slicing the three-dimensional model to obtain a plurality of slice image layers, and generating a corresponding printing strategy for each slice image layer.

In the present step, a three-dimensional model of a product to be printed needs to be provided, then the three-dimensional model is sliced into a plurality of horizontal layers, that is, the slice image layers. Preferably, the slice image layers include color information. Then, a corresponding printing strategy is generated for each slice image layer, and the printing strategy is used for providing instructions for the supplying mechanism 200, the optical mechanism 400, the driving mechanism 300, the forming platform mechanism 500 and other constitutional units of the three-dimensional printing apparatus, so as to cooperatively act to form a horizontal cured layer corresponding to the slice image layer.

The printing strategy at least includes at least one of a relative movement information of the carrying area and the supplying assembly, material types of the printing materials supplied by the supplying mechanism, and a projection information of the optical mechanism. Optionally, the relative movement information of the carrying area and the supplying assembly includes, but is not limited to, relative position information of the carrying area and the supplying assembly, relative speed information of the carrying area and the supplying assembly, movement path information of the carrying area, and movement path information of the supplying assembly.

For the supplying mechanism 200, the printing strategy at least defines supplying channels of the supplying assembly 201 for supplying the printing materials, the diameter of the supplying channel, a relative movement path of the supplying assembly, the types of the printing materials, the supply amount of the printing materials, and the like, and the printing strategy can further define the length of the supplying channel, a relative distance of the supplying assembly, and the like, so as to realize a pattern of the slice image layer.

For the optical mechanism 400, the projection information of the optical mechanism in the printing strategy at least defines a projection pattern, a light-transmissive area, a light intensity, time and uniformity of exposure, and the like, so that the exposure of the pattern of the printing materials can be realized more accurately.

The projection pattern is consistent with the contour of the slice image layer, a shape pattern of the slice image layer is projected onto the carrying area of the material carrying mechanism through the optical mechanism by using the photo-curing technology in a projection manner, then photo-curing and forming are performed, and the entire layer of image can be cured at a time, so that each layer can be quickly cured. In this printing manner, the edge of a printed object is cured by directly using a projection contour of a projection plane, the precision of the edge of the printed object depends on the precision of a projection image of the optical mechanism, thus compared with ink-jet printing in which after the printing materials are ejected by a linear dispenser, a light source immediately follows the dispenser to expose, polymerize and cure a liquid photopolymer layer on a building tray without difference, the printing precision is higher, and particularly, the precision of the contour of the printed object can be higher.

For the driving mechanism 300, the relative movement information of the carrying area and the supplying assembly in the printing strategy at least defines a control instruction for implementing the relative movement between the supplying assembly and the carrying area 108 according to the relative movement path.

Step 200: supplying the printing material to the carrying area 108 of the material carrying mechanism 100 according to the printing strategy, wherein at least part of the slice image layers corresponds to two or more material types.

In the present step, the driving mechanism 300 acts, a relative movement between the supplying assembly 201 of the supplying mechanism 200 and the carrying area 108 of the forming platform 502 is provided, so that the supplying assembly 201 can be located at any position of the carrying area 108 to supply the printing material at any position of the carrying area 108.

The supplying mechanism 200 can supply the plurality of types of printing materials to the carrying area 108 through the supplying assembly 201, so that required types of printing materials can be correspondingly supplied at different positions of the carrying area 108 as needed. Specifically, different types of printing materials are stored in different material storage portions of the material storage assembly, different supplying channels communicate with the material storage portions storing the different types of printing materials, and the different types of printing materials are ejected by different supplying channels of the dispenser assembly by using the pump, so as to eject the printing materials to the carrying area 108 of the carrying mechanism 100 during the printing process. The supplying assembly 201 can supply at least two different types of printing materials, therefore color printing can be realized, and the printing of different requirement performances can also be realized. Preferably, one dispenser can correspond to four supplying channels, and each supplying channel can supply one type of printing material.

Step 300: exposing and curing the printing material by the optical mechanism according to the projection information, so as to form the cured layer.

In the present step, the forming platform 502 gradually approaches to the carrying area 108 of the material carrying mechanism 100 under the driving of the first elevator assembly 501, and the forming surface 5021 is attached to the upper surface of the printing material in the carrying area 108; and the light of the optical mechanism 400 irradiates into the printing material in the carrying area 108 after passing through a light-transmissive area, so that the printing material located between the material carrying mechanism 100 and the forming surface 5021 is cured and is cured on the forming surface 5021 of the forming platform 502, or cured on a previous layer of printing material that has been cured on the forming surface 5021.

Step 400: controlling the forming platform mechanism to separate the cured layer; and cleaning printing residues on the material carrying mechanism 100. In the present step, the forming platform 502 gradually moves away from the carrying area 108 of the material carrying mechanism 100 under the driving of the first elevator assembly 501, so that the cured slice layer is separated from the material carrying mechanism 100.

In some implementations, after the step 400, the method further includes:
Step 500: cleaning printing residues on the material carrying mechanism. That is, after the cured slice layer is separated from the material carrying mechanism 100, the cleaning mechanism 600 acts to clean up the printing residues on the material carrying mechanism 100. The printing residues include uncured printing materials and dregs remaining on the material carrying mechanism 100.

Optionally, the step 500 further includes: cleaning the printing residues on the cured layer. That is, after the cured slice layer is separated from the material carrying mechanism 100, the printing residues on the cured layer are cleaned up. The printing residues include uncured printing materials and residues remaining on the material carrying mechanism 100.

In some implementations, after the step 200, the method further includes step 210, that is, after the step of supplying corresponding types of printing materials at different positions of the carrying area 108 of the material carrying mechanism 100, a step 210 of leveling the printing material in the carrying area 108 to a preset thickness is provided.

In the present step, the leveling mechanism 700 acts to maintain, within a preset range, the thickness of the printing materials supplied to the carrying area 108 by the supplying assembly 201 in the step 200, so that the thickness of the printing materials is a required thickness of a single layer, and the leveling mechanism 700 can maintain a uniform thickness for the printing materials supplied on the carrying area 108 by the supplying assembly 201, so that the printing process is kept refined and accurate, and the printing precision is improved.

In some implementations, the step 200 specifically includes step 201 to step 203, that is, supplying the printing material to the carrying area 108 of the material carrying mechanism 100 according to the printing strategy includes:
step 201: generating supplying data information corresponding to each supplying position in the carrying area 108 according to the printing strategy, wherein the supplying data information at least includes a path information of the relative movement between the supplying assembly 201 and the carrying area 108 and type information of the printing materials; and the type information of the printing materials includes, but is not limited to, color information and material performance information;
step 202: the driving mechanism 300 acting, and the supplying assembly 201 and the carrying area 108 undergo relative movement according to the path information, so that the position of the supplying assembly 201 aligns with the supplying position; and
step 203: the supplying mechanism 200 acting to quantitatively supply a printing material corresponding to the type information at the supplying position through the supplying assembly 201.

By the step 201 to the step 203, the supply of the printing material at each position on the carrying area 108 can be accurately realized according to the printing strategy, and an image of the slice image layer to be cured is finally formed.

In some implementations, the three-dimensional model includes a first portion and a second portion, a printing material with a first-type color is supplied at a supplying position corresponding to the first portion, a printing material with a second-type color is supplied at a supplying position corresponding to the second portion, the first-type color is one or more colors, and the second-type color is one or more colors. By the implementation, color printing of the three-dimensional model can be realized, and different color setting manners can be realized in different regions. It should be noted that the first-type color can be one color and can also be a combination of a plurality of colors, and the second-type color can be one color and can also be a combination of a plurality of colors.

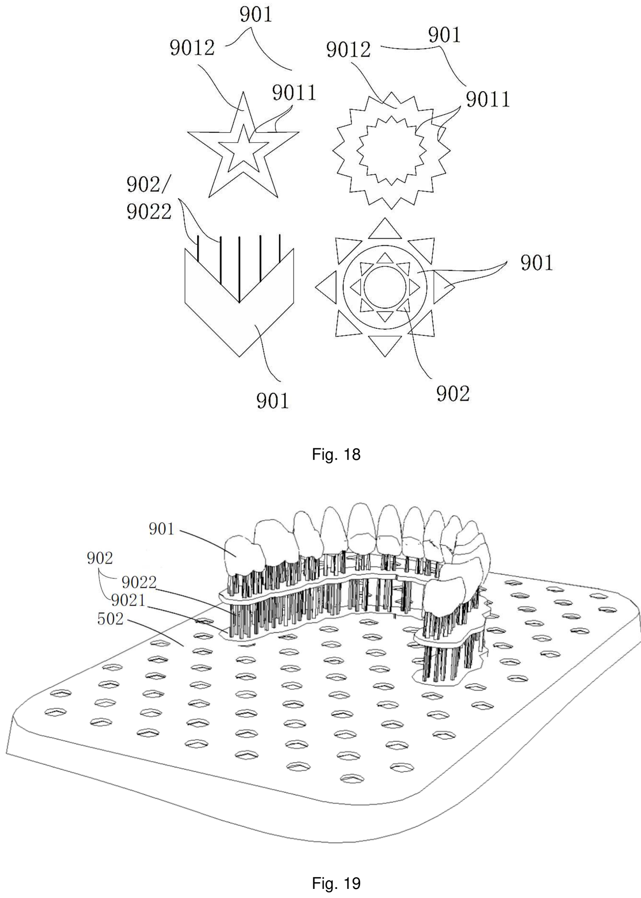

In a case where the type information of the printing material is color information, as shown in Fig. 18 and Fig. 19, as an optional implementation scenario, the first portion of the three-dimensional model includes a contour portion 9011 of the three-dimensional model, and the second portion includes a filling portion 9012 and/or a sacrificial structure 902 of the three-dimensional model, wherein a solid structure 901 of the three-dimensional model can be the contour portion 9011 and/or the filling portion 9012, the sacrificial structure 902 can be a bottom plate 9021 and/or a support 9022 of the three-dimensional model, as shown in Fig. 19, the bottom plate 9021 is used for connecting with the forming platform 502 and is located on the lowermost layer, the support 9022 is located on the bottom plate 9021, and the solid structure 901 is located on the support 9022. The bottom plate 9021 and the support 9022 of the three-dimensional model can be partial structures of the three-dimensional model that provide an overall strength support, and can also be structures that are discarded after the three-dimensional model is printed and formed, and the structures have no specific requirement for the color. During the process of forming each slice image layer, a printing material corresponding to the color required by the contour portion 9011 of the three-dimensional model is supplied at a supplying position corresponding to the contour portion 9011 of the three-dimensional model, that is, the printing material corresponding to the first-type color is supplied, and a single-color printing material is supplied at supplying positions corresponding to the filling portion 9012 and the sacrificial structure 902 of the three-dimensional model, that is, the printing material corresponding to the second-type color is supplied, therefore the contour portion 9011 of the three-dimensional model of the required color can be directly printed. The first-type color is one or a series of colors required by the contour portion 9011 of the three-dimensional model, and the second-type color is selected as a pure color.

In the case where the type information of the printing material is color information, as shown in Fig. 18 and Fig. 19, as another optional implementation scenario, the first portion of the three-dimensional model includes the filling portion 9012 of the three-dimensional model, the second portion includes the contour portion 9011 and/or the sacrificial structure 902 of the three-dimensional model, in the present application scenario, the color of the contour portion 9011 can be set to be a transparent color, then the filling portion 9012 is set to be a colored, in this way, the color of the filling portion can be used as the color of the appearance of the solid structure 901, wherein the bottom plate 9021 and the support 9022 of the three-dimensional model can be partial structures that provide an overall strength support in the three-dimensional model, and can also be structures that are discarded after the three-dimensional model is printed and formed, and the structures have no specific requirement for the color; and during the process of forming each slice image layer, a printing material corresponding to the transparent color is supplied at the supplying position corresponding to the contour portion 9011 of the three-dimensional model, a printing material corresponding to a pure color is supplied at the supplying position corresponding to the sacrificial structure 902, the transparent color of the contour portion 9011 and the pure color of the sacrificial structure 902 together form the second-type color, and the printing material corresponding to the color required for the appearance is supplied at the supplying position corresponding to the filling portion 9012 of the three-dimensional model, that is, the printing material corresponding to the first-type color is supplied, so that the filling portion 9012 of the three-dimensional model of the required color can be directly printed. The first-type color is one or a series of colors required by the filling portion 9012 of the three-dimensional model.

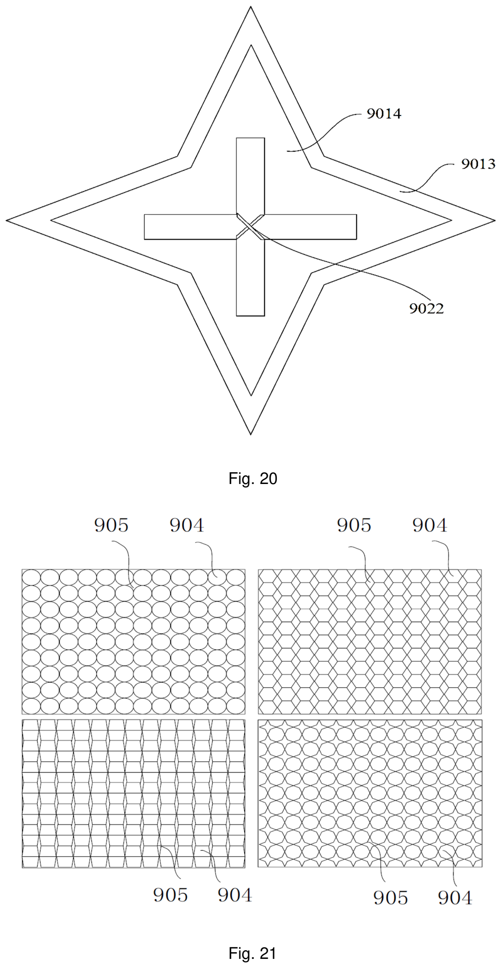

In a case where the type information of the printing material is color information, as shown in Fig. 20, as an optional implementation scenario, a thickness size of the contour portion 9011 of the three-dimensional module is relatively large, so if the entire contour portion 9011 is completely printed in colors, the economical efficiency is poor, and at this time, the following optimization can be performed: the first portion of the three-dimensional model includes an outer surface layer 9013 of the solid structure 901 of the three-dimensional model, which can be specifically an outer surface layer 9013 of the contour portion 9011, the second portion includes other regions (e.g., an inner layer 9014 of the solid structure 901) of the solid structure 901 and the sacrificial structure 902 of the three-dimensional model, wherein the sacrificial structure 902 can be the bottom plate 9021 and/or the support 9022 of the three-dimensional model. The bottom plate 9021 and/or the support 9022 of the three-dimensional model can be partial structures that provide an overall strength support in the three-dimensional model, and can also be structures that are discarded after the three-dimensional model is printed and formed, and the structures have no specific requirement for the color; the inner layer 9014 of the solid structure 901 is a portion that is not presented in the appearance of the product, and thus has no specific requirement for the color; during the process of forming each slice image layer, a printing material corresponding to the color required by the appearance of the solid structure 901 of the three-dimensional model is supplied at a supplying position corresponding to the outer surface layer 9013 of the solid structure 901 of the three-dimensional model, that is, the printing material corresponding to the first-type color is supplied, and a single-color printing material is supplied at supplying positions corresponding to the filling portion 9012, the support 9022 and the other regions of the solid structure 901 of the three-dimensional model, that is, the printing material corresponding to the second-type color is supplied, thus it is possible to directly print the solid structure 901 of the three-dimensional model in which the outer surface layer 9013 has the required color. The first-type color is one or a series of colors required by the outer surface layer 9013 of the solid structure 901 of the three-dimensional model, and the second-type color is selected as a pure color.

In some implementations, the three-dimensional model includes a first portion and a second portion, a printing material with a first-type performance is supplied at a supplying position corresponding to the first portion, and a printing material with a second-type performance is supplied at a supplying position corresponding to the second portion. By the implementation, combined printing of different performance materials of the three-dimensional model can be realized, and different material performance setting manners can be realized in different regions.

As an optional implementation scenario, as shown in Fig. 18 and Fig. 19, the first portion of the three-dimensional model is the contour portion 9011 of the three-dimensional model, the second portion of the three-dimensional model is the filling portion 9012 and/or the sacrificial structure 902 of the three-dimensional model, wherein the sacrificial structure 902 can be the bottom plate 9021 and/or the support 9022 of the three-dimensional model. During the process of forming each slice layer, a printing material with a relatively high strength performance is supplied at the supplying position corresponding to the contour portion 9011 of the three-dimensional model, and a printing material with a relatively low structural strength can be supplied at the supplying positions corresponding to the filling portion 9012 and the sacrificial structure 902 of the three-dimensional model, thus it is possible to directly print the three-dimensional model in which the contour portion 9011 and the sacrificial structure 902 have different material performances.

For example, the first portion of the three-dimensional model is the contour portion 9011 of the three-dimensional model, the second portion of the three-dimensional model is the support 9022 of the three-dimensional model, during the process of forming each slice image layer, a main body printing material corresponding to the contour portion 9011 is supplied at the supplying position corresponding to the contour portion 9011 of the three-dimensional model, and a material capable of being dissolved by specific solvent can be supplied as the printing material at the supplying position corresponding to the support 9022 of the three-dimensional model. The support 9022 formed by curing the material capable of being dissolved by specific solvent can be directly dissolved by a corresponding solvent for removal. For example, the material capable of being dissolved by specific solvent used can be selected as a water-soluble material, when the three-dimensional model is printed, other resin materials (non-water-soluble) are used as the main body printing material, and after the printing of the three-dimensional model is completed, the purpose of simply removing the support 9022 for the printed object can be directly realized in a water dissolution manner. In addition, when the support 9022 formed by the water-soluble material is dissolved in water, an external force effect of mechanical removal (such as shoveling or breaking) can also be reduced, so that the surface quality of the printing model can be improved. The water-soluble material can be a water-soluble polymer, and a monomer used can be an acrylic acid, a methacrylic acid, acrylamide, dimethylacrylamide, dimethylaminoethyl methacrylate, vinylpyrrolidone, etc. Certainly, in addition to the water-soluble material, other materials that can be dissolved in specific solvents can also be selected as the material capable of being dissolved by specific solvent, for example, an oil-soluble material, an alcohol-soluble material, and the like, as long as the material capable of being dissolved by specific solvent can be distinguished from the main body material of the contour portion 9011 of the three-dimensional model.

As an optional implementation scenario, the first portion of the three-dimensional model is a first main body structure, and the second portion of the three-dimensional model is a second main body structure of the three-dimensional model. During the process of forming each slice image layer, a printing material of which the mechanical performance is in a first interval is supplied at a supplying position corresponding to the first main body structure of the three-dimensional model, and a printing material of which the mechanical performance is in a second interval is supplied at a supplying position corresponding to the second main body structure of the three-dimensional model, wherein the first interval is different from the second interval, thus it is possible to directly print the three-dimensional model in which the first main body structure and the second main body structure have different material performances.

In some implementations, the step 100 of slicing the three-dimensional model to obtain the plurality of slice image layers can further include:
step 101: generating a series of slice image layers according to a three-dimensional model; and
step 102: segmenting at least part of areas of at least part of the slice image layers into several sub-areas, wherein gaps are provided between at least part of adjacent sub-areas. In the above step, as shown in Fig. 21, segmenting at least part of areas of the slice image layers into several sub-areas 904 is equivalent to performing lattice processing on at least part of areas of a slice image layer and proving a gap 905 between adjacent lattices. In this way, when the forming platform descends to press the printing materials distributed in a latticed manner, the printing materials in the lattices are pressed and extended to close the gap 905 between the sub-areas 904, and colors will not mix. Each sub-area 904 can have a possible specific shape selected from a plurality of shapes including, but not limited to, circle, square, triangle, polygon, etc. Optionally, all areas of the slice image layers can be segmented into several sub-areas 904 for lattice processing; optionally, the areas corresponding to the contours in the slice image layers can be subjected to the lattice processing, and the areas corresponding to the filling portion are not subjected to the lattice processing; and optionally, the areas corresponding to the filling portion in the slice image layers can be subjected to the lattice processing, and the areas corresponding to the contour are not subjected to the lattice processing. The lattice process of the slice image layers can be set according to the requirements of the technical solutions, and the lattice may be performed at any position, on a certain layer or in a certain area of a certain layer.

In some implementations, the supplying assembly 201 is provided with a heating assembly to heat the printing materials as needed, so as to reduce the viscosity of the printing materials and to improve the supplying speed and the uniformity of the supplying assembly 201. Preferably, the printing materials can be heated to 20 °C to 100 °C, or the printing materials can be heated to be higher than 100 °C and not higher than 200 °C.

In the description of the present invention, it should be understood that orientation or position relationships indicated by terms "upper", "lower", "left", "right", "inside", "outside", "axial", "radial", "circumferential" and the like are orientation or position relationships shown on the basis of the drawings, and are merely for the convenience of describing the present invention and simplifying the description, but do not indicate or imply that the referred apparatuses or elements must have specific orientations or must be constructed and operated in specific orientations, and thus cannot be construed as limitations to the present invention. In addition, features defined with "first" and "second" may explicitly or implicitly include one or more of the features. In the description of the present invention, unless specifically defined otherwise, "a plurality of" means two or more.

In the description of the present invention, it should be noted that unless otherwise expressly specified and limited, the terms "installed", "connected" and "connection" should be understood in a broad sense. For example, the connection may be a fixed connection, and may also be a detachable connection, or an integral connection; may be a mechanical connection, and may also be an electrical connection; and may be a direct connection, may be an indirect connection through an intermediate medium, and may also be internal communication between two elements. For those of ordinary skill in the art, the specific meanings of the above terms in the present invention may be understood in specific situations.

In the description of the present specification, description with reference to the terms "one embodiment", "some embodiments", "exemplary embodiments", "examples", "specific examples", or "some examples" and the like is intended to indicate that specific features, structures, materials or characteristics described in combination with the embodiment or example are included in at least one embodiment or example of the present invention. In the present specification, schematic representations of the above terms do not necessarily refer to the same embodiment or example. Furthermore, the described specific features, structures, materials or characteristics may be combined in any suitable manner in one or more embodiments or examples.

### Industrial Applicability

The solutions provided in the embodiments of present invention can be applied to the technical field of 3D printing, in the three-dimensional printing apparatus provided in the embodiments of the present invention, under the action of the driving mechanism, a relative movement of the supplying assembly of the supplying mechanism and the carrying area of the forming platform is allowed, so that the supplying assembly can be located at any position of the carrying area to supply the printing materials at any position of the carrying area. The supplying mechanism can supply the plurality of types of printing materials to the carrying area through the supplying assembly, so that required types of printing materials can be correspondingly supplied at different positions of the carrying area as needed, thereby realizing the printing of a plurality of materials on a single layer while avoiding the risk of material mixing, and color printing can be realized without the need for subsequent coloring, and the printing of different material performance requirements can also be realized; and moreover, it is possible to avoid the situation in which residual materials, such as upper-layer uncured resin or residues, generated during the printing process affect the printing of the next layer, so that the printing quality is better. The three-dimensional printing apparatus provided in the present invention can also realize the above three-dimensional printing method, and therefore also has the beneficial effects of improving the operation efficiency, reducing the labor cost, etc. The provided three-dimensional printing method implements the printing of a plurality of materials on a single layer while avoiding the risk of material mixing, can realize color printing without the need for subsequent coloring, and can also realize the printing of different material performance requirements; and by using the photo-curing technology in the projection manner, the edge of the printed object is directly cured by using the projection contour of the projection plane, therefore the precision of the edge of the printed object depends on the precision of the projection image of the optical mechanism, which leads to a higher printing precision, as compared with ink-jet printing. In addition, compared with overhead projection printing, printing is preferably performed in a bottom projection manner, and bottom projection lifting printing requires fewer supports than overhead projection sinking printing, thereby saving more materials.

## Claims

1. A three-dimensional printing apparatus, **characterized in that**, comprising:
a material carrying mechanism being light-transmissive, comprising a carrying area configured to carry a printing material;
a supplying mechanism, comprising a supplying assembly configured to quantitatively supply a plurality of types of printing materials;
a driving mechanism, configured to realize a relative movement between the carrying area and the supplying assembly, so that the supplying mechanism quantitatively supplies a preset type of printing material at a preset position of the material carrying mechanism;
an optical mechanism, configured to project light and expose the printing materials in the carrying area, so that the printing materials are subjected to a photo-curing reaction to form a printing model; and
a forming platform mechanism, configured to adhere, layer by layer, a cured layer formed by curing the printing material and separate the cured layer from the carrying area of the material carrying mechanism.

2. The three-dimensional printing apparatus according to claim 1, further comprising:
a leveling mechanism, configured to maintain, within a preset range, a thickness of the printing material on the material carrying mechanism supplied by the supplying mechanism; and/or
a cleaning mechanism, configured to remove a residual printing material on the carrying area after the forming platform mechanism separates the cured layer.

3. The three-dimensional printing apparatus according to claim 2, wherein the leveling mechanism comprises any one of a scraper assembly, a leveling roller assembly, a roller assembly, or a push rod assembly.

4. The three-dimensional printing apparatus according to claim 2, wherein the cleaning mechanism comprises any one of a scraper assembly, a high-pressure air gun, and a wiping assembly.

5. The three-dimensional printing apparatus according to claim 1, wherein the supplying assembly comprises a dispenser assembly, and the dispenser assembly is configured to quantitatively supply the plurality of types of printing materials.

6. The three-dimensional printing apparatus according to claim 1, wherein an optical system of the optical mechanism is any one of a DLP projection system, a Micro-LED display system, an LCOS optical system, an LCD display system or a laser galvanometer scanning system.

7. The three-dimensional printing apparatus according to claim 1, further comprising a calibration system, wherein the calibration system is configured to perform an optical calibration on the optical mechanism and/or perform a calibration on the supplying assembly;
the calibration system comprises a camera device, a calibration device and a calibration plate;
the calibration plate is used for being placed on the three-dimensional printing apparatus, and calibration points distributed at a preset distance are formed on the calibration plate;
an optical engine of the optical mechanism is used for projecting, to the carrying area, actual projection points distributed at the preset distance;
the camera device is used for photographing the calibration points on the calibration plate and the actual projection points on the carrying area; and
the calibration device is in communication connection with the camera device.

8. The three-dimensional printing apparatus according to claim 1, further comprising a calibration system, wherein the calibration system is configured to calibrate and align a supplying point of the supplying assembly and a projection point of the optical mechanism.

9. The three-dimensional printing apparatus according to claim 1, wherein the material carrying mechanism comprises a transparent film, an intermediate layer and an upper transparent plate, and the transparent film is attached to the upper transparent plate via the intermediate layer.

10. The three-dimensional printing apparatus according to claim 1, wherein the material carrying mechanism comprises a transparent film and a film frame, and the transparent film is tightly stretched and fixed on the film frame.

11. The three-dimensional printing apparatus according to claim 10, wherein,
the film frame comprises an upper film frame, and the transparent film is tensioned on the upper film frame; or the film frame comprises an upper film frame and a lower film frame, and the transparent film is tightly stretched and fixed between the upper film frame and the lower film frame.

12. The three-dimensional printing apparatus according to claim 10, wherein the material carrying mechanism further comprises an upper transparent plate, and the upper transparent plate is disposed below the transparent film.

13. The three-dimensional printing apparatus according to claim 12, wherein a fixing and constraining medium is disposed between the upper transparent plate and the transparent film, and the fixing and constraining medium comprises one or more of a silicone layer, an adhesive layer or a back adhesive layer.

14. The three-dimensional printing apparatus according to claim 12, wherein a first cavity is formed between the upper transparent plate and the transparent film, and a fluid is introduced into the first cavity.

15. The three-dimensional printing apparatus according to claim 14, wherein the fluid is at least one of oxygen-rich liquid, inert liquid, oxygen, air, oxygen-rich gas, and nitrogen.

16. The three-dimensional printing apparatus according to claim 9 or 12, wherein the material carrying mechanism further comprises a gas supply assembly and a lower transparent plate, the lower transparent plate is located below the upper transparent plate, a second cavity is formed between the lower transparent plate and the upper transparent plate, and the gas supply assembly is configured to introduce a gas into the second cavity.

17. The three-dimensional printing apparatus according to claim 1, wherein,
the driving mechanism comprises a first driving assembly, and the first driving assembly is configured to drive the supplying assembly to move in a space; or
the driving mechanism comprises a second driving assembly, and the second driving assembly is configured to drive the carrying area of the material carrying mechanism to move in a space; or
the driving mechanism comprises a first driving assembly and a second driving assembly, the first driving assembly is configured to drive the supplying assembly to move in a space, and the second driving assembly is configured to drive the carrying area of the material carrying mechanism to move in the space.

18. The three-dimensional printing apparatus according to claim 1, wherein the supplying mechanism further comprises a heating assembly, and the heating assembly is configured to heat the supplying assembly, so that a temperature of the supplying assembly ranges from 20 °C to 100 °C.

19. The three-dimensional printing apparatus according to claim 1, wherein the supplying mechanism further comprises a heating assembly, and the heating assembly is configured to heat the supplying assembly, so that a temperature of the supplying assembly is higher than 100 °C and not higher than 200 °C.

20. A three-dimensional printing method, applied to the three-dimensional printing apparatus according to any of claims 1-19, comprising:
acquiring a three-dimensional model, slicing the three-dimensional model to obtain a plurality of slice image layers, and generating a corresponding printing strategy for each slice image layer, wherein the printing strategy comprises at least one of a relative movement information of the carrying area and the supplying assembly, material types of the printing materials supplied by the supplying mechanism, or a projection information of the optical mechanism;
supplying the printing material to the carrying area of the material carrying mechanism according to the printing strategy, wherein at least part of the slice image layers corresponds to two or more material types;
exposing and curing the printing material by the optical mechanism according to the projection information, so as to form the cured layer; and
controlling the forming platform mechanism to separate the cured layer.

21. The three-dimensional printing method according to claim 20, further comprising: after controlling the forming platform mechanism to separate the cured layer, cleaning a printing residue on the material carrying mechanism.

22. The three-dimensional printing method according to claim 20, further comprising: after controlling the forming platform mechanism to separate the cured layer, cleaning a printing residue on the cured layer.

23. The three-dimensional printing method according to claim 20, further comprising: after supplying the printing material to the carrying area of the material carrying mechanism, leveling the printing material in the carrying area to a preset thickness.

24. The three-dimensional printing method according to claim 20, wherein slicing the three-dimensional model to obtain the plurality of slice image layers comprises:
generating a series of slice image layers according to the three-dimensional model; and
segmenting at least part of areas of at least part of the slice image layers into several sub-areas, wherein gaps are provided between at least part of adjacent sub-areas.

25. The three-dimensional printing method according to claim 20, wherein,
supplying the printing material to the carrying area of the material carrying mechanism according to the printing strategy comprises:
controlling a relative movement between the supplying assembly and the carrying area by the driving mechanism according to the printing strategy, so that a position of the supplying assembly aligns with a supplying position; and
supplying a corresponding printing material at the supplying position via the supplying assembly of the supplying mechanism according to the printing strategy.

26. The three-dimensional printing method according to claim 20, wherein the material type comprises a color information and a material performance information.

27. The three-dimensional printing method according to claim 26, wherein the three-dimensional model comprises a first portion and a second portion, a printing material with a first-type color is supplied at a supplying position corresponding to the first portion, a printing material with a second-type color is supplied at a supplying position corresponding to the second portion, the first-type color is one or more colors, and the second-type color is one or more colors.

28. The three-dimensional printing method according to claim 27, wherein the first portion comprises a contour portion of the three-dimensional model, and the second portion comprises a filling portion and/or a sacrificial structure of the three-dimensional model; or
the first portion comprises a filling portion of the three-dimensional model, and the second portion comprises a contour portion and/or a sacrificial structure of the three-dimensional model.

29. The three-dimensional printing method according to claim 27, wherein the first portion comprises an outer surface layer of a solid structure of the three-dimensional model, and the second portion comprises other regions of the solid structure and/or a sacrificial structure of the three-dimensional model.

30. The three-dimensional printing method according to claim 26, wherein the three-dimensional model comprises a first portion and a second portion, a printing material with a first-type performance is supplied at a supplying position corresponding to the first portion, and a printing material with a second-type performance is supplied at a supplying position corresponding to the second portion.

31. The three-dimensional printing method according to claim 30, wherein,
the first portion comprises a contour portion of the three-dimensional model, and the second portion comprises a filling portion and/or a sacrificial structure of the three-dimensional model.

32. The three-dimensional printing method according to claim 28 or 31, wherein the sacrificial structure is a bottom plate and/or a support of the three-dimensional model.

33. The three-dimensional printing method according to claim 31, wherein the printing material with the second-type performance used by the sacrificial structure of the three-dimensional model is a material capable of being dissolved by specific solvent.

34. The three-dimensional printing method according to claim 20, wherein a temperature of the supplying assembly ranges from 20 °C to 100 °C during a supplying process.

35. The three-dimensional printing method according to claim 20, wherein a temperature of the supplying assembly is higher than 100 °C and not higher than 200 °C during a supplying process.
